(19) Europäisches Patentamt
European Patent Office
Office européen des brevets

(11) **EP 4 375 895 B1**

(12) **EUROPEAN PATENT SPECIFICATION**

(45) Date of publication and mention
of the grant of the patent:
**22.04.2026 Bulletin 2026/17**

(21) Application number: **23201644.4**

(22) Date of filing: **04.10.2023**

(51) International Patent Classification (IPC):
*G06Q 10/04* (2023.01)        *G06Q 50/02* (2024.01)
*G06Q 10/0631* (2023.01)      *G06N 3/126* (2023.01)
*G06Q 10/08* (2024.01)        *A01C 21/00* (2006.01)
*A01B 76/00* (2006.01)        *G06N 20/00* (2019.01)

(52) Cooperative Patent Classification (CPC):
**G06Q 10/04; G06N 3/126; G06Q 10/06312;
G06Q 10/06314; G06Q 10/08; G06Q 50/02;**
A01B 76/00; A01C 21/005; G06N 20/00

(54) **METHODS AND SYSTEMS FOR GENERATING OPTIMIZED PLANTING SCHEDULE OF CROP TO
OVERCOME STORAGE CAPABILITIES**

VERFAHREN UND SYSTEME ZUR ERZEUGUNG EINES OPTIMIERTEN PFLANZPLANS VON
NUTZPFLANZEN ZUR ÜBERWINDUNG VON SPEICHERKAPAZITÄTEN

PROCÉDÉS ET SYSTÈMES POUR GÉNÉRER UN PROGRAMME DE PLANTATION OPTIMISÉ DE
CULTURE POUR SURMONTER LES CAPACITÉS DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.11.2022 IN 202221067748**

(43) Date of publication of application:
**29.05.2024 Bulletin 2024/22**

(73) Proprietor: **Tata Consultancy Services Limited
Maharashtra (IN)**

(72) Inventors:
• **BHOSALE, SWAPNIL PRAKASH
400601 Maharashtra (IN)**
• **CHAKRABORTY, RUPAYAN
400601 Maharashtra (IN)**
• **SARANGI, SANAT
400601 Maharashtra (IN)**

• **JUNAGADE, SANKET KAILAS
400601 Maharashtra (IN)**
• **PAPPULA, SRINIVASU
500081 Telangana (IN)**

(74) Representative: **Goddar, Heinz J.
Boehmert & Boehmert
Anwaltspartnerschaft mbB
Pettenkoferstrasse 22
80336 München (DE)**

(56) References cited:
**US-A1- 2011 276 336     US-A1- 2020 134 485**

• **JAVAD ANSARIFAR ET AL: "Scheduling Planting
Time Through Developing an Optimization Model
and Analysis of Time Series Growing Degree
Units", ARXIV.ORG, CORNELL UNIVERSITY
LIBRARY, 201 OLIN LIBRARY CORNELL
UNIVERSITY ITHACA, NY 14853, 2 July 2022
(2022-07-02), XP091262175**

**Description**

CROSS-REFERENCE TO RELATED APPLICATIONS AND PRIORITY

The present application claims priority to Indian application no. 202221067748, filed on November 24, 2022.

TECHNICAL FIELD

The disclosure herein generally relates to the field of precision agriculture, and more specifically to methods and systems for generating an optimized planting schedule of a crop to overcome storage capabilities.

BACKGROUND

Due to the recent developments in agricultural technologies, their application, and hybridization of crops, the production of the crops increases, but most of the time, the storage capacity remains limited in storage houses. Due to the limitations in the storage capacity, the crops get harvested more or less than the actual storage capacity. Erratic weekly harvesting creates logistical and productivity issues. Conventional techniques in the art are limited in dealing with actual planting schedule of the crops in accordance with the storage capacities, thus leading to suboptimal harvest cycles that fail to meet the optimal storage requirements.

JAVAD ANSARIFAR ET AL: "Scheduling Planting Time Through Developing an Optimization Model and Analysis of Time Series Growing Degree Units" discloses producing higher-quality crops within shortened breeding cycles ensures global food availability and security, but this improvement intensifies logistical and productivity challenges for seed industries in the year-round breeding process due to the storage limitations. In the 2021 Syngenta crop challenge in analytics, Syngenta raised the problem to design an optimization model for the planting time scheduling in the 2020 year-round breeding process so that there is a consistent harvest quantity each week. They released a dataset that contained 2569 seed populations with their planting windows, required growing degree units for harvesting, and their harvest quantities at two sites. To address this challenge, we developed a new framework that consists of a weather time series model and an optimization model to schedule the planting time. A deep recurrent neural network was designed to predict the weather into the future, and a Gaussian process model on top of the time-series model was developed to model the uncertainty of forecasted weather. The proposed optimization models also scheduled the seed population's planting time at the fewest number of weeks with a more consistent weekly harvest quantity. Using the proposed optimization models can decrease the required capacity by 69% at site 0 and up to 51% at site 1 compared to the original planting time.

US 2020/134485 A1 discloses digital plans for agricultural fields. In an embodiment, a model receives digital inputs including stress risk data, product maturity data, field location data, planting date data, and/or harvest date data. The model mathematically correlates sets of digital inputs with threshold data associated with the stress risk data. The model is used to generate stress risk prediction data for a set of product maturity and field location combinations. In a digital plan, product maturity data or planting date data or harvest date data or field location data can be adjusted based on the stress risk prediction data. A digital plan can be transmitted to a field manager computing device. An agricultural apparatus can be moved in response to a digital plan.

US 2011/276336 A1 discloses systems and methods (i.e. utilities) in which cultivators of varying skill-levels use a web-based application or software, to manage the complexity involved in planning and implementation of annual production of high-yields of multiple crops over time for a specific number of consumers and/or to fulfill specific retail and/or wholesale sales projections.

SUMMARY

Embodiments of the present disclosure present technological improvements as solutions to one or more of the above-mentioned technical problems recognized by the inventors in conventional systems. The invention is set out in the appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for generating an optimized planting schedule of a crop to overcome storage capabilities, in accordance with some embodiments of the present disclosure.

FIGS. 2A through 2D illustrates exemplary flow diagrams of a processor-implemented method for generating an optimized planting schedule of a crop to overcome storage capabilities, in accordance with some embodiments of the present disclosure.

FIG. 3 is an exemplary block diagram showing an encoding representation of a planting schedule of the crop for one or more crop fields, in accordance with some embodiments of the present disclosure.

FIGS. 4A and 4B illustrates exemplary flow diagrams for determining, for each initial planting schedule of a plurality of initial planting schedules, (i) an initial harvest schedule, (ii) an initial weekly production capacity of the crop from each crop field of the one or more crop fields, in accordance with some embodiments of the present disclosure.

FIG. 5 illustrates exemplary flow diagram for determining a plurality of successive planting schedules based on the plurality of initial planting schedules and the fitness value of each initial planting schedule, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Harvest scheduling and planning provide decisions on where to harvest, when to harvest, and how much to harvest, using a historical data as a precursor. Harvest scheduling is challenging and complex, because of the unpredictability of the natural processes, involvement of numerous decision variables and the complexity of the constraints in terms of storage, time, transportation and overall procurement costs. Each agricultural farm has a planting period within which all the crops in the entire farm need to be planted. Conventional optimization models for harvest scheduling are aimed at finding an optimal planting schedule (planting date) within the planting period for each farm, such that crops planted using this schedule, provide a constant yield throughout the harvest season, well within the capacity constraints of the harvesting site (minimize over-harvesting/wastage). The technical problems been widely explored with approaches ranging from linear programming, multi-integer programming to even routing algorithms. However, existing techniques face the challenge of combinatorial explosion, since a linear increase in the number of farms leads to an exponential increase in the possible candidate planting schedules.

Given the cyclical nature of most seasonal crops where produce from a given farm is only available in a burst after the harvest, there is a need to maintain steady supply chains to the consumer-base from which the demand is throughout the year for many agro-commodities. This gap between the continuous nature of the demand and jittery nature of each supply endpoint could be bridged by effective pooling of farms together with staggered planting schedules that help reduce wait times between harvests. Further effective storage of available harvest that is not immediately required from the consumer market yet compensates for any demands that come outside of the harvest windows while also reduces produce wastage is an additional layer that smoothens the experience for the consumer from a continuous availability standpoint.

The present invention solves the technical problems in the art for generating an optimized planting schedule and the optimized harvest schedule of a crop to overcome storage capabilities, by using an optimization model. The optimization model makes use of the cumulative maturity value (CMV) data for each day of the planting period and the harvest period of the crop, and optimizes the planning associated with planting of crops for a set of farms so that interval between harvest period is minimized and the end-of-harvest produce volumes meet certain thresholds to facilitate storage of all procurement without wastage and as per the market demand.

In the context of the present disclosure, the words 'farm', 'plot', 'crop field', 'farm field', and so on, represent a physical land area where the crop is cultivated, or the agricultural activities are performed.

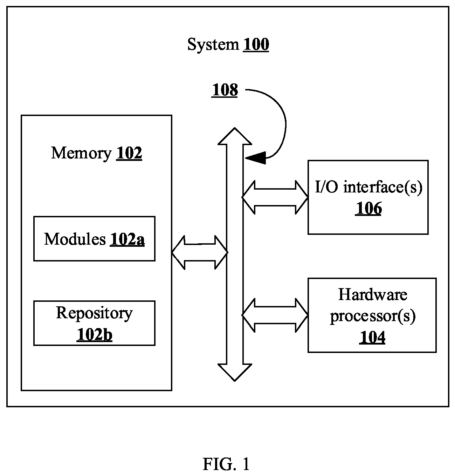

Referring now to the drawings, and more particularly to FIG. 1 through FIG. 5, where similar reference characters denote corresponding features consistently throughout the figures, there are shown preferred embodiments and these embodiments are described in the context of the following exemplary systems and/or methods.

FIG. 1 is an exemplary block diagram of a system 100 for generating an optimized planting schedule of a crop to overcome storage capabilities, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

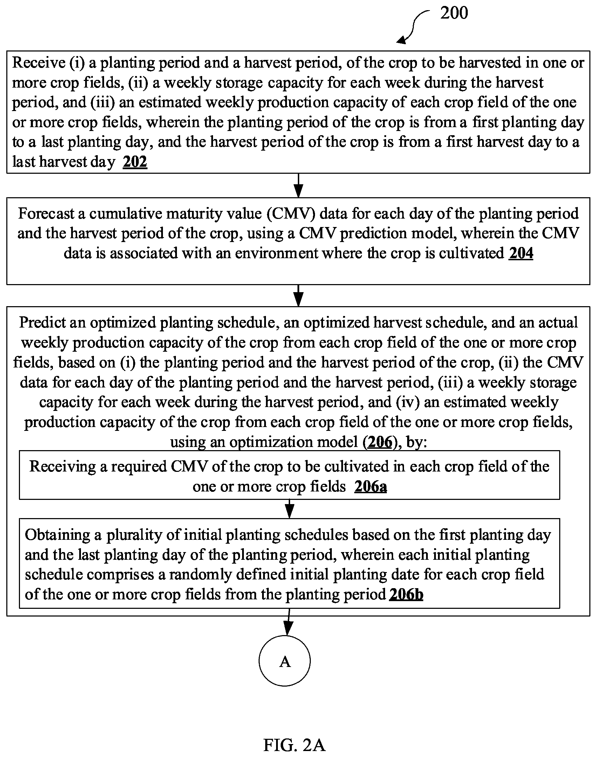

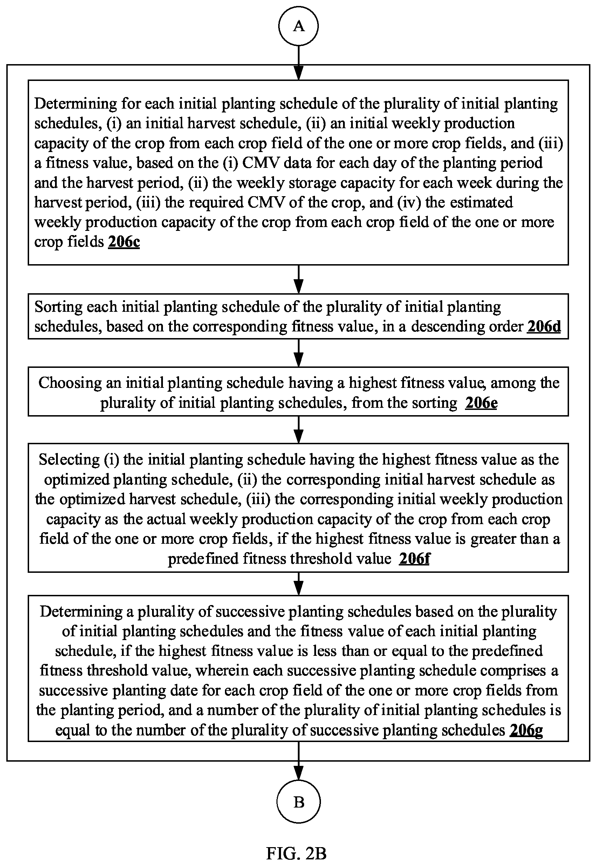

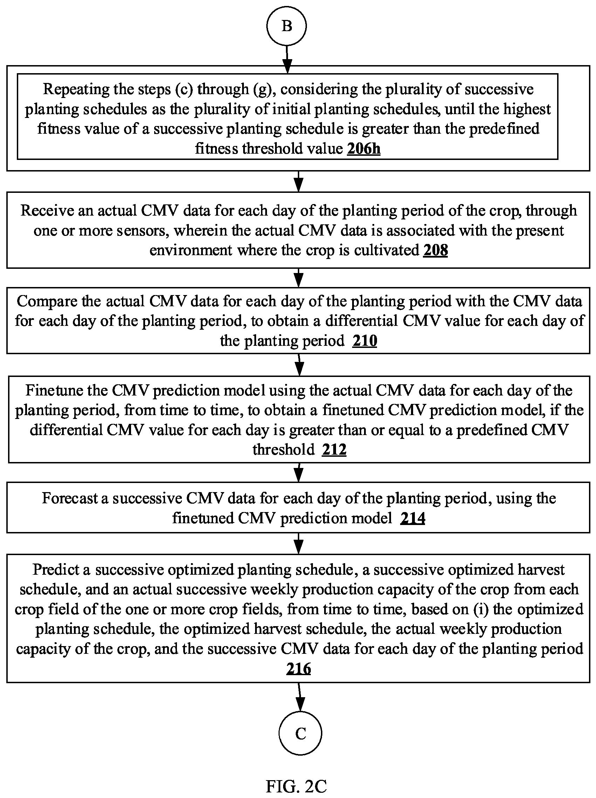

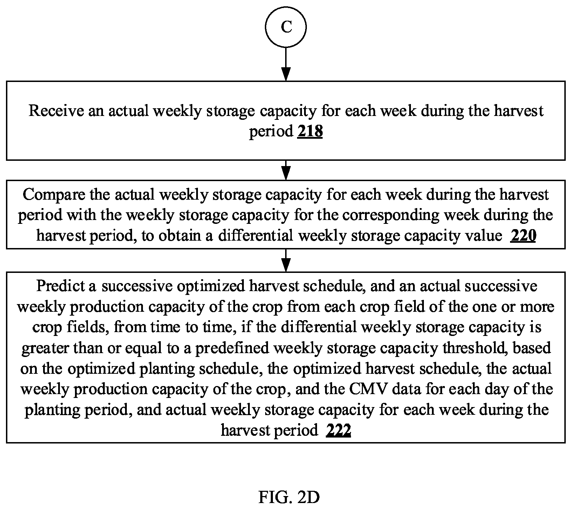

Referring to FIGS. 2A and 2D, components and functionalities of the system 100 are described in accordance with an example embodiment of the present disclosure. For example, FIGS. 2A and 2D illustrates exemplary flow diagrams of a processor-implemented method 200 for generating the optimized planting schedule of the crop to overcome storage capabilities, in accordance with some embodiments of the present disclosure. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive (i) a planting period and a harvest period, of the crop to be harvested in one or more crop fields, (ii) a weekly storage capacity for each week during the harvest period, and (iii) an estimated weekly production capacity of each crop field of the one or more crop fields. The planting period is a planting season duration which is ideal for planting the crop to be harvested in one or more crop fields. The planting period of the crop is measured in number of days and from a first planting day to a last planting day, wherein the duration from the first planting day and the last planting day defines the planting period. The date or a day on which the crop is planted during the planting period is referred as a planting date. For example, the planting window for crop type maize is 30 days during the winter (Rabbi) season, 60 days during the spring, and 15 days during the kharif (monsoon) season approximately.

In a similar manner, the harvest period is a duration of time throughout the harvest season that is appropriate for gathering the produce or yield of the crop from one or more crop fields. The duration between the first harvest day and the last harvest day determines the harvest period or maturity period, which is measured in the number of days from the first harvest day to the last harvest day. To preserve the quality of the crop, harvesting should take place throughout the designated time frame. For instance, depending on the season, the maize harvest time (maturity) can vary by 1 to 25 days. Here, the harvest period is longer in the winter and shorter in the spring. Based on the accumulation of GDU values, this time frame differs.

Both the planting period and the harvest period are linked and is estimated each based on the period of others. For example, the harvest period can be estimated based on the planting day in the planting period of the crop. Similarly, the harvest the crop or produce on certain duration (harvest period), the planting date (the planting period) of the crop can be estimated. The crop to be planted or harvested need not be same in each of the one or more crop fields. Alternatively, different crop may be planted or cultivated in each crop field.

The weekly storage capacity defines the quantity of the crop or produce can be stored in a certain storage such as, warehouse, cold storage, go downs, and so on., for each week during the harvest period of the crop. The weekly storage capacity depends on the volume of the storage available and based on the type of the crop. For example, weekly storage capacity is 10,000 quintals in each week.

At step 204 of the method 200, the one or more hardware processors 104 of the system 100 are configured to forecast a cumulative maturity value (CMV) data for each day of the planting period (from the first planting day to the last planting date) and the harvest period (from the first harvest day to the last harvest day) of the crop to be harvested. In other words, the CMV data defines the maturity level of the crop from the planting date till the last harvest date of the crop. The CMV data is associated with an environment where the crop is cultivated, i.e., the maturity level of the crop depends on the climatic or environmental parameters, soil parameters, and so on.

The CMV data for each day of the planting period includes a date of the day and a growing degree unit (GDU) of the crop for the corresponding date. The GDU of the crop is measured in terms of a daily temperature and a daily humidity of an environment, for each day, where the crop is cultivated. Similarly, the CMV data for each day of the harvest period includes the date of the day and the GDU of the crop for the corresponding date.

The CMV data for each day of the planting period and the harvest period is forecasted using a cumulative maturity value (CMV) prediction model. In an embodiment, the CMV prediction model is obtained as explained in below four steps. At first step, a historical CMV data for each day of a plurality of days. The historical CMV data is associated with the environment where the crop is cultivated. In an embodiment, a number of the plurality of days is 1 year. The historical CMV data for each day includes a historical date of the day and a historical growing degree unit (GDU) of the crop for the corresponding historical date. The historical GDU of the crop is measured in terms of the daily temperature and the daily humidity of an environment, for each day, where the crop cultivated.

At second step, the historical CMV data for each day of a plurality of days, received at the first step is preprocessed to obtain a pre-processed historical CMV data for each day of the plurality of days. The pre-processing includes transforming non-stationary format of the historical CMV data for each day into a stationary format. Further, the pre-processing includes but is not limited to filling missing data, outlier removal, and so on. Transforming the non-stationary format of the historical CMV data for each day into the stationary format includes formatting of day and date structure, uniform CMV format correction and so on.

At third step, an auto regression analysis is performed on the pre-processed historical CMV data for each day of the plurality of days, to obtain an initial CMV estimated model. In an embodiment, a time-series forecasting model such as Auto Regressive Integrated Moving Average (ARIMA) model is used to carry out the regression analysis on the preprocessed historical CMV data and to obtain the initial CMV estimated model.

A standard notation is used for the ARIMA model is $(p,d,q)_m$, wherein $p$ is the number of autoregressive terms, d is the number of nonseasonal differences, q is the number of lagged forecast errors in the prediction equation, m is the seasonal period (e.g., number of observations per year), where these parameters are substituted with integer values.

The input data to the ARIMA model is the pre-processed historical CMV data for each day of the plurality of days in and around the specific agricultural region where the crops have been cultivated, and the output data is projected crop cycle data. Finding the order of an ARIMA model can be done with the use of Akaike's Information Criterion (AIC), which was helpful in choosing predictors for regression. Better-fitting models tend to have lower AIC values, and a model is regarded to be considerably better than another if its delta-AIC (the difference between the two AIC values being compared) is more than -2.

$$AIC = 2\,Log\,(L) = 2(p + q + k + 1)$$

The pseudocode for training or fitting the ARIMA model (the initial CMV estimated model) is as below:

```
<Start>
procedure Optimal_ARIMA
aic ← inf # initial define function
if m >365 then # Seasonal period
    for p ← 0 to n1 do # number of autoregressive terms
        for q ← 0 to n2 do # the number of lagged forecast errors
in the prediction equation
            for d ← 0 to n3 do # number of nonseasonal
differences
                #(n1, n2, and n3 are integer
hyperparameters)
                model ← fit (ARIMA (p, q, d, m))
                aic_curr ← compute_AIC(model)
                if aic_curr < aic then
                    model_opt ← model
                    aic ← aic_curr
    return model_opt
<End>
```

At fourth step, the regression analysis mentioned at third step on the initial CMV estimation model is performed until the best fitted ARIMA model is obtained using residual analysis, based on a residual threshold, to obtain the CMV prediction model. The obtained CMV prediction model is used to forecast or predict the future CMV data in the coming days. In the present invention, the CMV data for each day or date during the planting period and the harvest period is forecasted using the obtained CMV prediction model.

At step 206 of the method 200, the one or more hardware processors 104 of the system 100 are configured to predict an optimized planting schedule, an optimized harvest schedule, and an actual weekly production capacity of the crop from each crop field of the one or more crop fields, based on:

(i) the planting period and the harvest period of the crop received at step 202 of the method 200;
(ii) the CMV data for each day of the planting period and the harvest period forecasted at step 204 of the method 200;
(iii) a weekly storage capacity for each week during the harvest period received at step 202 of the method 200; and
(iv) an estimated weekly production capacity of the crop from each crop field of the one or more crop fields received at step 202 of the method 200.

The optimized planting schedule gives an optimized planting date of the crop in each crop field of the plurality of crop fields, wherein the optimized planting date for each crop field is determined keeping in mind the optimized harvest schedule of the crop from each of the crop field. The optimized harvest schedule gives an optimized harvest date for harvesting the produce of the crop, for each crop field, wherein the optimized harvest date for each crop field is determined keeping in mind the estimated weekly production capacity of the crop from each crop field and the weekly storage capacity for each week during the harvest period. The actual weekly production capacity of the crop from each crop field gives the actual weekly production capacity of the crop from each crop field, in real-time, in line to the corresponding optimal planting date and the corresponding optimal harvest date.

An optimization model such as optimizer based genetic algorithm (GA) is used to predict the optimized planting schedule, the optimized harvest schedule, and the actual weekly production capacity of the crop from each crop field of the one or more crop fields. Below steps from 206a through 206h explain in detail how the optimized planting schedule, the optimized harvest schedule, and the actual weekly production capacity of the crop from each crop field are predicted using the optimization model.

At step 206a, a required CMV of the crop to be cultivated in each crop field of the one or more crop fields is received. The required CMV is a CMV value which is equivalent to the GDU of the crop, where the GDU further depends on the daily temperature and the daily humidity of the environment, for each day, as explained at step 204 of the method 200. The GDU of the crop is helpful to determine the harvest date of the crop from the start of planting date of the corresponding crop in the crop field.

At step 206b, a plurality of initial planting schedules is obtained based on the first planting day and the last planting day of the planting period received at step 202 of the method 200. Each initial planting schedule (of the plurality of initial planting schedules) includes a randomly defined initial planting date for each crop field of the one or more crop fields from the planting period (picked from the first planting day to the last planting day). A number of the plurality of initial planting schedules is determined based on the number of the one or more crop fields and the number of days present in the planting period. In an embodiment, the number of the plurality of initial planting schedules is 100 for 20 crop fields and the planting duration of 30 days.

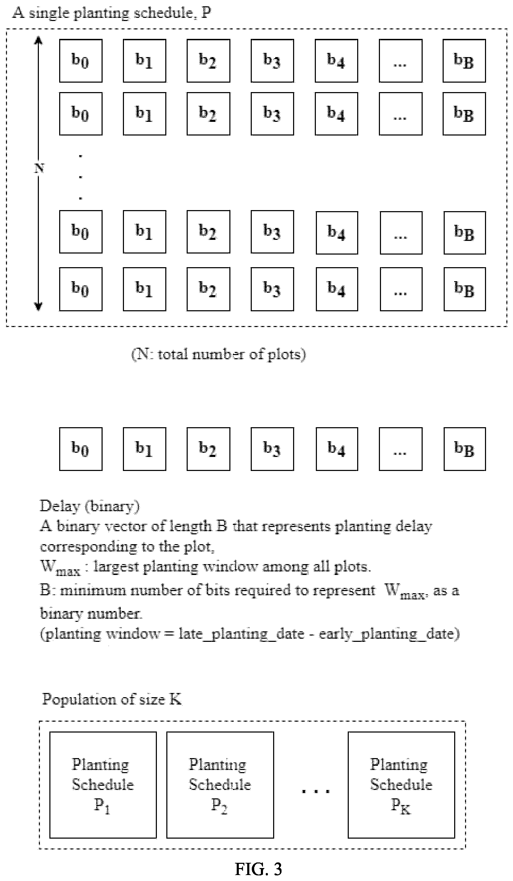

FIG. 3 is an exemplary block diagram showing an encoding representation of a planting schedule of the crop for one or more crop fields, in accordance with some embodiments of the present disclosure. As shown in FIG. 3, each crop field is defined with a binary vector ($b_0, b_1, b_2, ..., b_B$) of a length $B$, where the binary vector represents a delay of the planting date (how many the days for which the planting date can be delayed within the planting period) for each farm field. The delay of the planting date for each crop field, is depends on a largest planting of the corresponding crop field, wherein the largest planting period is calculated based on the number of days present between the last planting day and the first planting day (i.e., the last planting day minus the first planting day). B represents a minimum number of bits required to represent the largest planting period ($W_{max}$) as a binary number.

As shown in FIG. 3, the planting schedules are represented with $P_1, P_2, ..., P_K$, wherein $K$ represents the number of planting schedules. The encoding representation of the planting schedule for the one or more crop fields look same for the initial planting schedules and the optimized planting schedules.

At step 206c, (i) an initial harvest schedule, (ii) an initial weekly production capacity of the crop from each crop field of the one or more crop fields, and (iii) a fitness value, are determined for each initial planting schedule of the plurality of initial planting schedules obtained at step 206b. The initial harvest schedule contains the initial harvest date of the crop for each crop field based on the initial weekly production capacity of the crop from each of the corresponding crop fields. The fitness value for each initial planting schedule, is a parameter used for deciding the optimality of the corresponding initial planting schedule in line with the initial harvest schedule and the initial weekly production capacity of the crop.

The initial harvest schedule, the initial weekly production capacity of the crop from each crop field of the one or more crop fields, and the fitness value, for each initial planting schedule, are determined based on:

(i) CMV data for each day of the planting period and the harvest period received at step 204 of the method 200;
(ii) the weekly storage capacity for each week during the harvest period received at step 202 of the method 200;
(iii) the required CMV of the crop received at step 206a, and
(iv) the estimated weekly production capacity of the crop from each crop field of the one or more crop fields received at step 204 of the method 200.

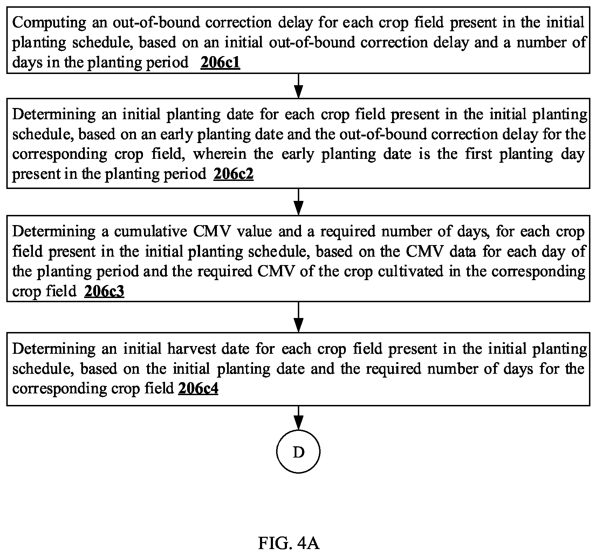

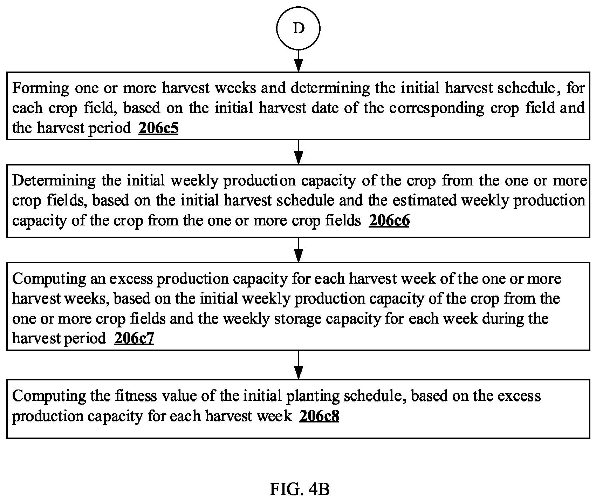

FIGS. 4A and 4B illustrates exemplary flow diagrams for determining, for each initial planting schedule of a plurality of initial planting schedules, (i) an initial harvest schedule, (ii) an initial weekly production capacity of the crop from each crop field of the one or more crop fields, in accordance with some embodiments of the present disclosure. A shown in FIGS. 4A and 4B, determining the initial harvest schedule, the initial weekly production capacity of the crop from each crop field of the one or more crop fields, and the fitness value, for each initial planting schedule, is further explained through steps 206c1 to 206c8.

At step 206c1, an out-of-bound correction delay for each crop field present in the initial planting schedule, is computed based on an initial out-of-bound correction delay and a number of days in the planting period. The delay for each crop field is the number of days for which the planting date can be delayed. In an embodiment, the delay is computed by subtracting the early planting date from the last planting date. The out-of-bound correction delay for $i^{th}$ the crop field is computed using a below equation:

$$delay_i = delay_i \% (W_i + 1)$$

wherein $delay_i$ in the right-hand side of the equation is the initial out-of-bound correction delay and the $W_i$ is the number of days present in the planting period. If the planting period has already started, then $W_i$ becomes the number of remaining days present in the planting period. The out-of-bound correction delay for $i^{th}$ the crop field is required to obtain the planting date within the planting period.

At step 206c2, an initial planting date for each crop field present in the initial planting schedule, is determined based on an early planting date and the out-of-bound correction delay for the corresponding crop field computed at step 206c1. The early planting date is the first planting day present in the planting period which is received at step 202 of the method 200. The out-of-bound correction delay for each crop field computed based on the late planting date and the early planting date. The initial planting date for $i^{th}$ the crop field present in the initial planting schedule, is determined using the below equation:

$$initial\ planting\ date = early\ planting\ date + delay_i$$

At step 206c3, a cumulative CMV value and a required number of days, are determined for each crop field present in the initial planting schedule, based on the CMV value present in the CMV data for each day of the planting period forecasted at step 204 of the method 200 and the required CMV of the crop cultivated in the corresponding crop field received at step 206a. The cumulative CMV value for each day of the crop is determined using the below equation:

$$culumative\ CMV\ value$$
$$= initial\ culumative\ CMV\ value + forcasted\ CMV\ value$$

The required number of days is determined based on for how many days the *culumative CMV value* of the crop in the crop field becomes equivalent to the required CMV of the crop for the corresponding crop field.

At step 206c4, an initial harvest date for each crop field present in the initial planting schedule, is determined based on the initial planting date determined at step 206c2 and the required number of days for the corresponding crop field determined at step 206c3. The initial harvest date for $i^{th}$ the crop field is determined using the below equation:

$$initial\ harvest\ date_i = initial\ planting\ date_i + required\ number\ of\ days_i$$

At step 206c5, one or more harvest weeks are formed, and the initial harvest schedule is determined, for each crop field present in the initial planting schedule. Each harvest week of the one or more harvest weeks, for the one or more crop fields, is formed using the initial harvest date of each crop field. The initial harvest schedule is determined using the one or more harvest weeks formed and the harvest period of the one or more crop fields.

At step 206c6, the initial weekly production capacity of the crop from the one or more crop fields, is determined based on the initial harvest schedule determined at step 206c5 and the estimated weekly production capacity of the crop from the one or more crop fields received at step 202 of the method 200.

At 206c7, an excess production capacity for each harvest week of the one or more harvest weeks in the initial harvest schedule is computed based on the initial weekly production capacity of the crop from the one or more crop fields determined at step 206c6, and the weekly storage capacity (the present weekly storage capacity) for each week during the actual harvest period.

At step 206c8, the fitness value of the initial planting schedule, is computed, based on the excess production capacity for each harvest week computed at step 206c7. In an embodiment, the fitness value of the initial planting schedule is computed based on an absolute median of the excess production capacity for each harvest week. The excess production capacity for each harvest week should be as less as possible, otherwise the excess produce is going to be waste. The excess production capacity for each harvest week should be so critical and to be as minimum as possible, especially when there is no demand for the corresponding crop production.

The pseudocode for determining, (i) an initial harvest schedule, (ii) an initial weekly production capacity of the crop from each crop field of the one or more crop fields, and (iii) a fitness value, for each initial planting schedule of the plurality of initial planting schedules is as below:

INPUT:

- P: Planting schedule of size [N X B]

- Forecasted CMV data: Forecasted CMV values for each day in the planting and harvest period.

- C: the weekly storage capacity for each week during the harvest period.

- Required_CMV: required CMV of the crop to be cultivated in each crop field of N crop fields.

- Production_capacity: the estimated weekly production capacity of the crop from each crop field of N crop fields.

OUTPUT:

- Fitness value: the parameter used for deciding the optimality of each initial planting schedule.

- Harvest_schedule: a vector consisting of harvest dates for each of the N crop fields.

- Weekly_harvest_quantity: initial weekly production capacity of the crop from all crop fields.

[START]

1. Convert delays (binary vector of length B) for each of the N crop fields from binary to decimal.

New size of P: [N X 1]

2. harvest_schedule <- []

For $i^{th}$ crop field in 1 to N,

a. Perform out-of-bounds correction for $delay_i$ corresponding to the $i^{th}$ plot.

$delay_i = delay_i$ % $(W_i + 1)$, where $W_i$ is the planting window of the $i^{th}$ plot.

b. $planting\_date_i = early\_planting\_date_i + delay_i$

where $early\_planting\_date_i$ is the start of the planting season for the $i^{th}$ crop field.

c. Compute harvest_date

i. required_days <- 0,

ii. cummulative_CMV <- 0,

iii. d <- $planting\_date_i$ I.e., the current day.

iv. While cummulative_CMV < $Required\_CMV_i$,

(where the $Required\_CMV_i$ is the required CMV value for crops in the $i^{th}$ crop field)

1. cummulative_CMV = cummulative_CMV+$Predicted\_CMV_d$

2. Increment d by one day.

3. required_days = required_days + 1

v. $harvest\_date_i = planting\_date_i + required\_days$

d. Calculate harvest_week$_i$ (ISO week number) from harvest_date$_i$.

e. Append harvest_week$_i$ to harvest_schedule.

3. New size of harvest_schedule: [N X 1].

4. Compute weekly_harvest_quantity for each week in the harvest period based on the harvest_schedule and production_capacity of crop field to be harvested.

5. Compute weekly_excess_harvest_quantity for each week in the harvest period based on the weekly_harvest_quantity and C.

6. fitness <- Absolute median of weekly_excess_harvest_quantity

7. Return fitness value, harvest_schedule, weekly_harvest_quantity

[END]

Hence, the fitness value computed out of the excess production capacity for each harvest week also should be as less as possible and used to determine the optimality of the corresponding initial planting schedule. Like the steps 206c1 through 206c8, the fitness value along with the initial harvest schedule and the initial weekly production capacity of the crop is determined for each initial planting schedule of the plurality of initial planting schedules to determine their optimality.

At step 206d, each initial planting schedule of the plurality of initial planting schedules, are sorted based on the corresponding fitness value, in a descending order. The initial planting schedule having a highest fitness value is placed at first, the initial planting schedule with a next highest fitness value is placed at second, and so on, the initial planting schedule having a least fitness value is placed at last.

At step 206e, the initial planting schedule having the highest fitness value, among the plurality of initial planting schedules, is selected from the sorting at step 206d.

At step 206f, if the highest fitness value obtained at step 206e is greater than a predefined fitness threshold value, then the corresponding initial planting schedule (having the highest fitness value) is selected as the optimized planting schedule. The corresponding initial harvest schedule is selected as the optimized harvest schedule. The corresponding initial weekly production capacity is selected as the actual weekly production capacity of the crop from each crop field of the one or more crop fields. In an embodiment, the predefined fitness threshold value is the maximum required cumulative CMV value for that specific crop.

The planting date present in the optimized planting schedule, for each crop field, is used for actual planting of the crop keeping in mind the harvest week of the optimized harvest schedule, and the weekly storage capacity for each week during the harvest period such that the storage facilities are storing the produce is sufficiently available. The harvest week of the optimized harvest schedule is further optimized based on the actual weekly production capacity of the crop from each crop field of the one or more crop fields and the weekly storage capacity for each week during the harvest period.

At step 206g, a plurality of successive planting schedules is determined, based on the plurality of initial planting schedules obtained at step 206b and the fitness value of each initial planting schedule, if the highest fitness value is less than or equal to the predefined fitness threshold value. Like each initial planting schedule, each successive planting schedule includes a successive planting date for each crop field of the one or more crop fields from the planting period. The number of the plurality of initial planting schedules is equal to the number of the plurality of successive planting schedules. More specifically, same number of the successive planting schedules are determined as the total number of the initial planting schedules.

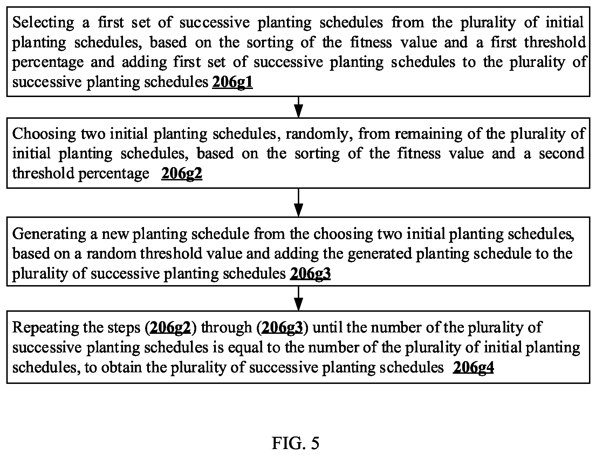

FIG. 5 illustrates exemplary flow diagram for determining the plurality of successive planting schedules based on the plurality of initial planting schedules and the fitness value of each initial planting schedule, in accordance with some embodiments of the present disclosure. As shown in FIG. 5, determining the plurality of successive planting schedules is explained in detail through steps 206g1 to 206g4.

At step 206g1, the first set of successive planting schedules from the plurality of initial planting schedules, is selected based on the sorting of the fitness value at step 206d and a first threshold percentage. In an embodiment, the first threshold percentage is 10%. For example, if the number of the plurality of initial planting schedules are 100 and the first threshold percentage is 10%, then the top 10% of the initial planting schedules (having their fitness value in descending order) are selected as the first set of successive planting schedules. The first set of successive planting schedules are then added to the plurality of successive planting schedules.

At step 206g2, two initial planting schedules, are randomly selected, from remaining of the plurality of initial planting schedules (after removing the initial planting schedules selected as the first set of successive planting schedules) from the sorting based on the second threshold percentage. In an embodiment, the second threshold percentage is 50%. For example, if the number of the plurality of initial planting schedules are 100, the first threshold percentage is 10% and the second threshold percentage is 50%, then the top 10% of the initial planting schedules are added to the plurality of successive planting schedules. From the remaining initial planting schedules from the same sorting, the two initial planting schedules, are randomly selected from top 50% of the initial planting schedules.

At step 206g3, a new planting schedule from the choosing two initial planting schedules at step 206g2, is generated based on a random threshold value. A random mating probability value is defined for each of the two initial planting schedules selected. If the random mating probability value for initial planting schedule is less than the random threshold value, then the corresponding initial planting schedule is selected as the new planting schedule. If the random mating probability value for initial planting schedule is greater than the random threshold value, then the corresponding initial planting schedule is selected as the new planting schedule. Else a new planting schedule is generated and selected as the new planting schedule. The generated new planting schedule is added to the plurality of successive planting schedules.

At step 206g4, the steps (206g2) through (a206g3) are repeated until the number of the plurality of successive planting schedules is equal to the number of the plurality of initial planting schedules, to obtain the plurality of successive planting schedules.

The pseudocode for generating a new planting schedule from the chosen two initial planting schedules, is as below:

> INPUT:
>
> > • P: Planting schedules P1 and P2
>
> OUTPUT:
>
> > • Offspring: New planting schedule generated as a result of mating P1
>
> and P2
>
> [START]
>
> 1. Randomly choose mating probability, Prob in [0,1].
>
> 2. If Prob <= 0.45,
>
> > Offspring <- P1
>
> else if 0.45 < Prob < 0.90,
>
> Offspring <- P2
>
> else,
>
> Offspring <- Randomly initialized planting schedule (I.e., N randomly
>
> initialized binary vectors of length B)
>
> 3. Return Offspring
>
> [END]

At step 206h, the steps (206c) through (206g), are repeated considering the plurality of successive planting schedules as the plurality of initial planting schedules, until the highest fitness value of the successive planting schedule is greater than the predefined fitness threshold value. The end objective of the steps 206a though 206h is to obtain the optimized planting schedule of the one or more crop fields, the optimized harvest schedule of the one or more crop fields, and the actual weekly production capacity of the crop from each crop field of the one or more crop fields.

The pseudocode for predicting the optimized planting schedule, the optimized harvest schedule, and the actual weekly production capacity of the crop from each crop field of the one or more crop fields, is as below:

> INPUT:

- P: Planting schedule of size [N X B]
- Forecasted CMV data: Forecasted CMV values for each day in the planting and harvest period.
- C: the weekly storage capacity for each week during the harvest period.
- Required_CMV: required CMV of the crop to be cultivated in each crop field of N crop fields.
- Production_capacity: the estimated weekly production capacity of the crop from each crop field of N crop fields.

OUTPUT:

- Optimal_planting_schedule: the optimal planting schedule consisting of optimal planting date for each crop field of the N crop fields, to be adopted by the user.
- Optimal harvest_schedule: a vector consisting of harvest dates for each crop field of the N crop fields.
- Weekly_harvest_quantity: the actual weekly production capacity of the crop from each crop field of the N crop fields

[START]

1. Creating initial (GA) population [P1, P2, ...., PK]

   Generate K initial planting schedules, each with size= [N X B],
   (Each initial planting schedule consists of N randomly initialized binary vectors of length B).

2. Compute fitness of each initial planting schedule in the initial population.
3. current_generation <- Initial population
4. While fitness of current_generation[0] > fitness_threshold:

(where current_generation[0] is the first initial planting schedule in the current_generation)

1. Sort planting schedules in the current_generation on the basis of their fitness values in an ascending order.
2. Creating a new generation,

   a. The top 10% planting schedules from (sorted) current_generation, are passed without any mutation to the new generation.
   b. To populate the remainder of the new generation,

      i. Randomly choose two planting schedules from the top 50% schedules of the current_generation.
      ii. Offspring produced as a result of mating between these two schedules is added as a new planting schedule to the new generation.
      iii. Repeat (a) and (b) until size of new generation = K

3. Compute fitness of each initial planting schedule in the new generation.
4. current_generation <- new generation
5. Optimal_planting_schedule <- current_generation[0]
6. fitness value, harvest_schedule, weekly_harvest_quantity
7. Return Optimal_planting_schedule, optimal harvest_schedule, weekly_harvest_quantity

[END]

In case of any unforeseen conditions such as cold frost, cyclones such as the forecasted CMV values at step 204 of the method 200 may typically change based on the change in the weather conditions especially the temperature and the humidity. Hence the optimized planting schedule the optimized harvest schedule also needs to be further optimized based on the change in the CMV value in accordance with the unforeseen conditions.

At step 208 of the method 200, the one or more hardware processors 104 of the system 100 are configured to receive an actual CMV data for each day of the planting period of the crop. The actual CMV data refers to the CMV data of present day and on or after the first planting day of the planting period. As explained at step 204 of the method 200, the actual CMV data for each day is associated with the present environment where the crop is cultivated. The actual CMV data for each day is the actual GDU of the crop which is measured in terms of the actual daily temperature and the actual daily humidity of the environment, for each day. Further, the actual daily temperature and the actual daily humidity of the environment, for each day, are measured using one or more sensors such as a temperature sensor, a pressure sensor, a humidity sensor, and so on.

At step 210 of the method 200, the one or more hardware processors 104 of the system 100 are configured to compare the actual CMV data for each day of the planting period received at step 208 of the method 200, with the CMV data for each day of the planting period forecasted at step 204 of the method 200. More specifically the actual CMV value received at step 208 of the method 200 for each day is compared with the forecasted CMV value obtained at step 204 of the method 200 for the corresponding day, to obtain a differential CMV value for each day of the planting period.

At step 212 of the method 200, the one or more hardware processors 104 of the system 100 are configured to finetune the CMV prediction model obtained at step 204 of the method 200, using the actual CMV data for each day of the planting period, from time to time, to obtain a finetuned CMV prediction model. The CMV prediction model obtained at step 204 of the method 200 is finetuned only if the differential CMV value for each day obtained at step 210 of the method 200, is greater than or equal to a predefined CMV threshold. If the differential CMV value for each day obtained at step 210 of the method 200, is lesser than the predefined CMV threshold, then finetuning the CMV prediction model obtained at step 204 of the method 200 is not required and the same CMV prediction model is considered for future actions and planning. In an embodiment, the predefined CMV threshold is within +/- 0.3 of the actual CMV value for the specific day.

At step 214 of the method 200, the one or more hardware processors 104 of the system 100 are configured to forecast a successive CMV data for each day of the remaining days of the planting period (as the planting period has already started, using the finetuned CMV prediction model obtained at step 212 of the method 200. The successive CMV data for each day includes the successive CMV value for the corresponding day.

At step 216 of the method 200, the one or more hardware processors 104 of the system 100 are configured to predict a successive optimized planting schedule, a successive optimized harvest schedule, and an actual successive weekly production capacity of the crop from each crop field of the one or more crop fields, from time to time. These successive schedules are obtained based on (i) the optimized planting schedule, the optimized harvest schedule, the actual weekly production capacity of the crop, and the successive CMV data for each day of the remaining days planting period, using the steps as explained through 206a to 206h. In this case, the successive CMV data for each day of the remaining days planting period replaces the CMV data for each day of the planting period forecasted at step 204 of the method 200.

Like this, the optimized planting schedule and the optimized harvest schedule are further optimized, from time-to-time, wherever there is a real-time change in the environment and based on the current storage capacity or the storage facilities and the market demand for the crop, even the planting period has already started.

At step 218 of the method 200, the one or more hardware processors 104 of the system 100 are configured to receive actual weekly storage capacity for each week during the harvest period, when the harvest period has already started. The actual weekly storage capacity for each week is the real-time data which may change in real-time and based on the current data of actual weekly storage capacity for each week, further planning can be done to the remaining produce or the crop, based on the market conditions such as the more market demand.

At step 220 of the method 200, the one or more hardware processors 104 of the system 100 are configured to compare the actual weekly storage capacity for each week during the harvest period, received at step 218 of the method 200, with the weekly storage capacity for the corresponding week during the harvest period received at step 202 of the method 200, to obtain a differential weekly storage capacity value.

At step 222 of the method 200, the one or more hardware processors 104 of the system 100 are configured to predict, a successive optimized harvest schedule, and an actual successive weekly production capacity of the crop from each crop field of the one or more crop fields, from time to time. The successive optimized harvest schedule, and the actual successive weekly production capacity of the crop are predicted only if the differential weekly storage capacity obtained at step 220 of the method 200, is greater than or equal to a predefined weekly storage capacity threshold. The successive optimized harvest schedule, and the actual successive weekly production capacity of the crop are predicted, based on the optimized planting schedule, the optimized harvest schedule, the actual weekly production capacity of the crop, and the CMV data for each day of the planting period, and actual weekly storage capacity for each week of the remaining weeks of the harvest period, using the steps as explained through 206a to 206h. The CMV data for each day of the planting period in this case may be the CMV data for each day forecasted at step 204 of the method 200 if the planting period not yet started, or the successive CMV data for each day forecasted at step 214 of the method 200 if the planting period has already started and there is a change in the actual CMV data.

Like this, the optimized harvest schedule is further optimized, from time-to-time, wherever there is a real-time change in the environment and based on the current storage capacity or the storage facilities and the market demand for the crop, even the harvest period has already started. The optimization of both the planting schedule and the harvest schedule for the crop for each crop field are optimized from time to time, based on the environmental or weather conditions, the available weekly storage capacity and facilities and as well as the market conditions.

In accordance with an embodiment of the present disclosure, the total harvest quantity for every week should be less than the entire harvest capacity of that area, which can be mathematically formulated as,
*for each week j,*

$$H_j^0 \leq C^0$$

$$\sum_{p_{j_i}^0 = 1}^{p_j^0} H_{p_{j_i}^0} \leq C^0$$

wherein

*N =number of crop fields or plots*
*W =total number of harvest weeks*
*$C^0$ =capacity of storage of warehouse*
*i =index of crop field, i=1; 2..., N*
*j =index of harvesting weeks, j =1; 2...., W*
*$p_j^0$ =total number of crop fields, to be harvested in week j*
*$p_{ji}^0$ =index of crop fields, to be harvested in week j, $p_{ji}^0$=1; 2...., $p_j^0$*
*$H^{p_{ji}^0}$=harvest quantity of crop fields $p_{ji}^0$*
*$H_j^0$ =total forecasted harvest quantity is harvested and store in the storage for week j*

In a chromosome representation if a delay value is d, associated with each crop field *p* such that,

$$p_{plantingdate} = p_{earlyplantingdate} + d_p$$

where $d_p$ is the delay for the crop field *p*.

The method and systems of the present disclosure generates a real-time optimized planting schedule and the harvest schedule, from time to time, in accordance with the storage capabilities of the warehouse for each week. Hence the supply of the produce of the crop is maintained in accordance with the demand and market conditions. The optimization model solves the multi-objective optimization with due consideration to the combinatorial explosion experienced in integer programming methods, by handling the indeterminism in planting dates and physical attributes (such as moisture, temperature, storage and storage and processing capacities etc.).

The present disclosure is adaptive to drastic changes in the crop and environmental conditions (ex: moisture, temperature, etc.) and scenarios (ex: pest infestation) by being able to back-track and leverage intermediate solutions to be able to adjust to changing scenarios, while simultaneously being able to be interpreted in terms of pre-established physical attributes (ex: storage, processing, labor costs).

The present disclosure imitates the iterative process of harvest scheduling and hence provides a provision for adapting to changes with respective to real-time scenarios. Harvesting is a repetitive process where initial planning based on trend forecasts for market price, demand etc., is continually updated as the harvest season progresses based on real-time conditions for the above factors.

Example scenario:

To show the experimental results of the present disclosure, 12 crop fields (P_1, P_2, ..., P12) are considered to cultivate the maize crop. The planting period and the harvest period for the crop are fixed at 25 days and 15 days respectively. The weekly storage capacity is considered as 10,000 tons. Table. 1 shows the required CMV for the maize, forecasted CMV value, and the required number of days to attain the required CMV (required CMV_days) based on the forecasted CMV value for each day during the planting period.

Table 1

| Crop field number | Planting Period | Forcasted CMV value | Harvested_Period | Required_CMV | Required CMV_days |
|---|---|---|---|---|---|
| P_1 | 25 | 10.957599 | 15 | 1050 | 86 |

(continued)

| Crop field number | Planting Period | Forcasted CMV value | Harvested_Period | Required_CMV | Required CMV_days |
|---|---|---|---|---|---|
| P_2 | 25 | 10.296799 | 15 | 1050 | 88 |
| P_3 | 25 | 10.905391 | 15 | 1050 | 88 |
| P_4 | 25 | 10.079771 | 15 | 1050 | 89 |
| P_5 | 25 | 10.786920 | 15 | 1050 | 90 |
| P_6 | 25 | 11.675309 | 15 | 1050 | 90 |
| P_7 | 25 | 11.028622 | 15 | 1050 | 88 |
| P_8 | 25 | 10.903242 | 15 | 1050 | 90 |
| P_9 | 25 | 10.934208 | 15 | 1050 | 89 |
| P_10 | 25 | 10.873920 | 15 | 1050 | 90 |
| P_11 | 25 | 10.582102 | 15 | 1050 | 90 |
| P_12 | 25 | 10.1094529 | 15 | 1050 | 90 |

Table 2 shows the optimized planting schedule, the optimized harvest schedule, and the actual weekly production capacity of the crop.

Table 2

| Corp field number | Predicted_planting_date | Predicited_Harvested_ date | Predicited _Harvested _week | Actual production capacity |
|---|---|---|---|---|
| P_1 | 01-01-2020 | 27-03-2020 | 13 | 342 |
| P_2 | 01-01-2020 | 29-03-2020 | 14 | 354 |
| P_3 | 07-01-2020 | 04-04-2020 | 14 | 251 |
| P_4 | 07-01-2020 | 05-04-2020 | 15 | 309 |
| P_5 | 12-01-2020 | 11-04-2020 | 15 | 232 |
| P_6 | 17-01-2020 | 16-04-2020 | 16 | 278 |
| P_7 | 21-01-2020 | 18-04-2020 | 16 | 312 |
| P_8 | 20-01-2020 | 19-04-2020 | 17 | 120 |
| P_9 | 23-01-2020 | 21-04-2020 | 17 | 400 |
| P_10 | 31-01-2020 | 30-04-2020 | 18 | 376 |
| P_11 | 01-02-2020 | 01-05-2020 | 18 | 263 |
| P_12 | 06-02-2020 | 06-05-2020 | 19 | 339 |

Table 3 shows the successive CMV value due to the cold frost and the change in the weather conditions.

Table 3

| Date | Before cold frost | Successive CMV (after cold frost) |
|---|---|---|
| 20-02-2020 | 10.75112045 | 10.75112 |
| 21-02-2020 | 10.99291168 | 10.992912 |
| 22-02-2020 | 10.59759923 | 10.669291 |
| 23-02-2020 | 10.29759923 | 10.297599 |
| 24-02-2020 | 10.1453906 | 6.8017903 |
| 25-02-2020 | 10.07977888 | 6.627227 |

(continued)

| Date | Before cold frost | Successive CMV (after cold frost) |
|---|---|---|
| 26-02-2020 | 9.962386772 | 6.0354774 |
| 27-02-2020 | 9.844921265 | 6.4708393 |
| 28-02-2020 | 10.72272441 | 6.2049776 |
| 29-02-2020 | 10.30949636 | 6.8176024 |
| 01-03-2020 | 9.861018767 | 6.5774214 |
| 02-03-2020 | 10.00450791 | 6.6513674 |
| 03-03-2020 | 9.354752372 | 6.3446389 |
| 04-03-2020 | 8.151749667 | 6.2198738 |
| 05-03-2020 | 8.365621142 | 7.9882565 |
| 06-03-2020 | 8.982539894 | 7.0608463 |
| 07-03-2020 | 8.43741495 | 7.1600094 |
| 08-03-2020 | 8.42856518 | 7.3105887 |
| 09-03-2020 | 8.741359454 | 7.9936213 |

Due to the change the CMV data or the values, the optimized planting schedule, and the optimized harvest schedule are to be further optimized and the table 4 shows the further optimized planting schedule and the harvest schedule.

Table 4

| Crop field number | Next Predicted_planting_date | Next Predicited_Harvested_date | Predicited _Harveste d_week | Actual production capacity |
|---|---|---|---|---|
| P_1 | 01-01-2020 | 20-04-2020 | 17 | 342 |
| P_2 | 01-01-2020 | 20-04-2020 | 17 | 354 |
| P_3 | 07-01-2020 | 26-04-2020 | 18 | 251 |
| P_4 | 07-01-2020 | 26-04-2020 | 18 | 309 |
| P_5 | 12-01-2020 | 04-05-2020 | 19 | 232 |
| P_6 | 17-01-2020 | 09-05-2020 | 19 | 278 |
| P_7 | 21-01-2020 | 15-05-2020 | 20 | 312 |
| P_8 | 20-01-2020 | 15-05-2020 | 20 | 120 |
| P_9 | 23-01-2020 | 20-05-2020 | 21 | 400 |
| P_10 | 31-01-2020 | 28-05-2020 | 22 | 376 |
| P_11 | 01-02-2020 | 29-05-2020 | 22 | 263 |
| P_12 | 06-02-2020 | 05-06-2020 | 23 | 339 |

The embodiments of present disclosure herein address unresolved problem of generating an optimized planting schedule and the optimized harvest schedule of a crop to overcome storage capabilities, by using an optimization model. The optimization model makes use of the cumulative maturity value (CMV) data for each day of the planting period and the harvest period of the crop, and optimizes the planning associated with planting of crops for a set of farms so that interval between harvest period is minimized and the end-of-harvest produce volumes meet certain thresholds to facilitate storage of all procurement without wastage and as per the market demand.

The written description describes the subject matter herein to enable any person skilled in the art to make and use the embodiments. The scope of the subject matter embodiments is defined by the claims.

It is further provided a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

## Claims

1. A processor-implemented method (200) for generating an optimized planting schedule of a crop to overcome storage capabilities, comprising the steps of:

   receiving, via one or more hardware processors, i) a planting period and a harvest period, of the crop to be harvested in one or more crop fields, ii) a weekly storage capacity for each week during the harvest period, and iii) an estimated weekly production capacity of each crop field of the one or more crop fields, wherein the planting period of the crop is from a first planting day to a last planting day, and the harvest period of the crop is from a first harvest day to a last harvest day (202);

   forecasting, via the one or more hardware processors, a cumulative maturity value, CMV, data for each day of the planting period and the harvest period of the crop, using a CMV prediction model, wherein the CMV data is associated with an environment where the crop is cultivated (204); and

   predicting, via the one or more hardware processors, an optimized planting schedule, an optimized harvest schedule, and a weekly harvest quantity of the crop from each crop field of the one or more crop fields, based on i) the planting period and the harvest period of the crop, ii) the CMV data for each day of the planting period and the harvest period, iii) a weekly storage capacity for each week during the harvest period, and iv) an estimated weekly production capacity of the crop from each crop field of the one or more crop fields, using an optimization model (206), by:

      a) receiving a required CMV of the crop to be cultivated in each crop field of the one or more crop fields (206a);
      b) obtaining a plurality of initial planting schedules based on the first planting day and the last planting day of the planting period, wherein each initial planting schedule comprises a randomly defined initial planting date for each crop field of the one or more crop fields from the planting period (206b);
      c) determining for each initial planting schedule of the plurality of initial planting schedules, i) an initial harvest schedule, ii) an initial weekly production capacity of the crop from each crop field of the one or more crop fields, and iii) a fitness value, based on the i) CMV data for each day of the planting period and the harvest period, ii) the weekly storage capacity for each week during the harvest period, iii) the required CMV of the crop, and iv) the estimated weekly production capacity of the crop from each crop field of the one or more crop fields (206c);

d) sorting each initial planting schedule of the plurality of initial planting schedules, based on the corresponding fitness value, in a descending order (206d);

e) choosing an initial planting schedule having a highest fitness value, among the plurality of initial planting schedules, from the sorting (206e);

f) selecting i) the initial planting schedule having the highest fitness value as the optimized planting schedule, ii) the corresponding initial harvest schedule as the optimized harvest schedule, iii) the corresponding initial weekly production capacity as the weekly harvest quantity of the crop from each crop field of the one or more crop fields, if the highest fitness value is greater than a predefined fitness threshold value (206f);

g) determining a plurality of successive planting schedules based on the plurality of initial planting schedules and the fitness value of each initial planting schedule, if the highest fitness value is less than or equal to the predefined fitness threshold value, wherein each successive planting schedule comprises a successive planting date for each crop field of the one or more crop fields from the planting period, and a number of the plurality of initial planting schedules is equal to the number of the plurality of successive planting schedules (206g); and

h) repeating the steps c) through g), considering the plurality of successive planting schedules as the plurality of initial planting schedules, until the highest fitness value of a successive planting schedule is greater than the predefined fitness threshold value (206h);

receiving, via the one or more hardware processors, an actual CMV data for each day of the planting period of the crop, through one or more sensors, wherein the actual CMV data is associated with the present environment where the crop is cultivated (208);

comparing, via the one or more hardware processors, the actual CMV data for each day of the planting period with the CMV data for each day of the planting period, to obtain a differential CMV value for each day of the planting period (210);

finetuning, via the one or more hardware processors, the CMV prediction model using the actual CMV data for each day of the planting period, from time to time, to obtain a finetuned CMV prediction model, if the differential CMV value for each day is greater than or equal to a predefined CMV threshold (212);

forecasting, via the one or more hardware processors, a successive CMV data for each day of the planting period, using the finetuned CMV prediction model (214);

predicting, via the one or more hardware processors, a successive optimized planting schedule, a successive optimized harvest schedule, and an actual successive weekly production capacity of the crop from each crop field of the one or more crop fields, from time to time, based on the optimized planting schedule, the optimized harvest schedule, the weekly harvest quantity of the crop, and the successive CMV data for each day of the planting period (216);

receiving, via the one or more hardware processors, an actual weekly storage capacity for each week during the harvest period (218);

comparing, via the one or more hardware processors, the actual weekly storage capacity for each week during the harvest period with the weekly storage capacity for the corresponding week during the harvest period, to obtain a differential weekly storage capacity value (220); and

predicting, via the one or more hardware processors, a successive optimized harvest schedule, and the actual successive weekly production capacity of the crop from each crop field of the one or more crop fields, from time to time, if the differential weekly storage capacity is greater than or equal to a predefined weekly storage capacity threshold, based on the optimized planting schedule, the optimized harvest schedule, the weekly harvest quantity of the crop, and the CMV data for each day of the planting period, and actual weekly storage capacity for each week during the harvest period (222).

2. The method as claimed in claim 1, wherein:

i) the CMV data for each day of the planting period comprises a date of the day and a growing degree unit, GDU, of the crop for the corresponding date; and

ii) the CMV data for each day of the harvest period comprises the date of the day and the GDU of the crop for the corresponding date, wherein the GDU of the crop is measured in terms of a daily temperature and a daily humidity of the environment, for each day, where the crop is cultivated.

3. The method as claimed in claim 1, wherein the CMV prediction model is obtained by:

receiving a historical CMV data for each day of a plurality of days, wherein the historical CMV data is associated with the environment where the crop is cultivated and the historical CMV data for each day comprises a historical date of the day and a historical growing degree unit, GDU, of the crop for the corresponding historical date, where the historical GDU of the crop is measured in terms of a daily temperature and a daily humidity of an environment, for each day, where the crop cultivated;

pre-processing the historical CMV data for each day of a plurality of days, to obtain a pre-processed historical CMV data for each day of the plurality of days, wherein the pre-processing comprises transforming non-stationary format of the historical CMV data for each day into a stationary format;

performing an auto regression analysis on the pre-processed historical CMV data for each day of the plurality of days, to obtain an initial CMV estimated model; and

carrying out a residual analysis on the initial CMV estimated model, based on a residual threshold, to obtain the CMV prediction model.

4. The method as claimed in claim **1,** wherein determining for each initial planting schedule of the plurality of initial planting schedules, i) an initial harvest schedule, ii) an initial weekly production capacity of the crop from each crop field of the one or more crop fields, and iii) a fitness value, based on the i) CMV data for each day of the planting period and the harvest period, ii) the weekly storage capacity for each week during the harvest period, iii) the required CMV of the crop, and iv) the estimated weekly production capacity of the crop from each crop field of the one or more crop fields, comprises:

computing an out-of-bound correction delay for each crop field present in the initial planting schedule, based on an initial out-of-bound correction delay and a number of days in the planting period (206c1);

determining an initial planting date for each crop field present in the initial planting schedule, based on an early planting date and the out-of-bound correction delay for the corresponding crop field, wherein the early planting date is the first planting day present in the planting period (206c2);

determining a cumulative CMV value and a required number of days, for each crop field present in the initial planting schedule, based on the CMV data for each day of the planting period and the required CMV of the crop cultivated in the corresponding crop field (206c3);

determining an initial harvest date for each crop field present in the initial planting schedule, based on the initial planting date and the required number of days for the corresponding crop field (206c4);

forming one or more harvest weeks and determining the initial harvest schedule, for each crop field, based on the initial harvest date of the corresponding crop field and the harvest period (206c5);

determining the initial weekly production capacity of the crop from the one or more crop fields, based on the initial harvest schedule and the estimated weekly production capacity of the crop from the one or more crop fields (206c6);

computing an excess production capacity for each harvest week of the one or more harvest weeks, based on the initial weekly production capacity of the crop from the one or more crop fields and the weekly storage capacity for each week during the harvest period (206c7); and

computing the fitness value of the initial planting schedule, based on the excess production capacity for each harvest week (206c8).

5. The method as claimed in claim 1, wherein determining the plurality of successive planting schedules based on the plurality of initial planting schedules and the fitness value of each initial planting schedule, if the highest fitness value is less than or equal to the predefined fitness threshold value, comprises:

a) selecting a first set of successive planting schedules from the plurality of initial planting schedules, based on the sorting of the fitness value and a first threshold percentage and adding first set of successive planting schedules to the plurality of successive planting schedules (2061);

b) choosing two initial planting schedules, randomly, from remaining of the plurality of initial planting schedules, based on the sorting of the fitness value and a second threshold percentage (206g2);

c) generating a new planting schedule from the choosing two initial planting schedules, based on a random threshold value and adding the generated planting schedule to the plurality of successive planting schedules (206g3); and

d) repeating the steps b) through c) until the number of the plurality of successive planting schedules is equal to the number of the plurality of initial planting schedules, to obtain the plurality of successive planting schedules (206g4).

6. A system (100) for generating an optimized planting schedule of a crop to overcome storage capabilities, comprising:

a memory (102) storing instructions;

one or more input/output (I/O) interfaces (106); and

one or more hardware processors (104) coupled to the memory (102) via the one or more I/O interfaces (106), wherein the one or more hardware processors (104) are configured by the instructions to:

receive i) a planting period and a harvest period, of the crop to be harvested in one or more crop fields, ii) a weekly storage capacity for each week during the harvest period, and iii) an estimated weekly production capacity of each crop field of the one or more crop fields, wherein the planting period of the crop is from a first planting day to a last planting day, and the harvest period of the crop is from a first harvest day to a last harvest day;

forecast a cumulative maturity value, CMV, data for each day of the planting period and the harvest period of the crop, using a CMV prediction model, wherein the CMV data is associated with an environment where the crop is cultivated; and

predict an optimized planting schedule, an optimized harvest schedule, and a weekly harvest quantity of the crop from each crop field of the one or more crop fields, based on i) the planting period and the harvest period of the crop, ii) the CMV data for each day of the planting period and the harvest period, iii) a weekly storage capacity for each week during the harvest period, and iv) an estimated weekly production capacity of the crop from each crop field of the one or more crop fields, using an optimization model, by:

a) receiving a required CMV of the crop to be cultivated in each crop field of the one or more crop fields;

b) obtaining a plurality of initial planting schedules based on the first planting day and the last planting day of the planting period, wherein each initial planting schedule comprises a randomly defined initial planting date for each crop field of the one or more crop fields from the planting period;

c) determining for each initial planting schedule of the plurality of initial planting schedules, i) an initial harvest schedule, ii) an initial weekly production capacity of the crop from each crop field of the one or more crop fields, and iii) a fitness value, based on the i) CMV data for each day of the planting period and the harvest period, ii) the weekly storage capacity for each week during the harvest period, iii) the required CMV of the crop, and iv) the estimated weekly production capacity of the crop from each crop field of the one or more crop fields;

d) sorting each initial planting schedule of the plurality of initial planting schedules, based on the corresponding fitness value, in a descending order;

e) choosing an initial planting schedule having a highest fitness value, among the plurality of initial planting schedules, from the sorting;

f) selecting i) the initial planting schedule having the highest fitness value as the optimized planting schedule, ii) the corresponding initial harvest schedule as the optimized harvest schedule, iii) the corresponding initial weekly production capacity as the weekly harvest quantity of the crop from each crop field of the one or more crop fields, if the highest fitness value is greater than a predefined fitness threshold value;

g) determining a plurality of successive planting schedules based on the plurality of initial planting schedules and the fitness value of each initial planting schedule, if the highest fitness value is less than or equal to the predefined fitness threshold value, wherein each successive planting schedule comprises a successive planting date for each crop field of the one or more crop fields from the planting period, and a number of the plurality of initial planting schedules is equal to the number of the plurality of successive planting schedules; and

h) repeating the steps c) through g), considering the plurality of successive planting schedules as the plurality of initial planting schedules, until the highest fitness value of a successive planting schedule is greater than the predefined fitness threshold value;

receive an actual CMV data for each day of the planting period of the crop, through one or more sensors, wherein the actual CMV data is associated with the present environment where the crop is cultivated;

compare the actual CMV data for each day of the planting period with the CMV data for each day of the planting period, to obtain a differential CMV value for each day of the planting period;

finetune the CMV prediction model using the actual CMV data for each day of the planting period, from time to time, to obtain a finetuned CMV prediction model, if the differential CMV value for each day is greater than or equal to a predefined CMV threshold;

forecast a successive CMV data for each day of the planting period, using the finetuned CMV prediction model;

predict a successive optimized planting schedule, a successive optimized harvest schedule, and an actual successive weekly production capacity of the crop from each crop field of the one or more crop fields, from time to time, based on the optimized planting schedule, the optimized harvest schedule, the weekly harvest quantity of the crop, and the successive CMV data for each day of the planting period;

receive an actual weekly storage capacity for each week during the harvest period;

compare the actual weekly storage capacity for each week during the harvest period with the weekly storage capacity for the corresponding week during the harvest period, to obtain a differential weekly storage capacity value; and

predict a successive optimized harvest schedule, and the actual successive weekly production capacity of the crop from each crop field of the one or more crop fields, from time to time, if the differential weekly storage capacity is greater than or equal to a predefined weekly storage capacity threshold, based on the optimized planting schedule, the optimized harvest schedule, the weekly harvest quantity of the crop, and the CMV data for each day of the planting period, and actual weekly storage capacity for each week during the harvest period.

7. The system as claimed in claim 6, wherein:

i) the CMV data for each day of the planting period comprises a date of the day and a growing degree unit, GDU, of the crop for the corresponding date; and

ii) the CMV data for each day of the harvest period comprises the date of the day and the GDU of the crop for the corresponding date, wherein the GDU of the crop is measured in terms of a daily temperature and a daily humidity of the environment, for each day, where the crop is cultivated.

8. The system as claimed in claim 6, wherein the one or more hardware processors (104) are configured by the instructions to obtain the CMV prediction model, by:

receiving a historical CMV data for each day of a plurality of days, wherein the historical CMV data is associated with the environment where the crop is cultivated and the historical CMV data for each day comprises a historical date of the day and a historical growing degree unit, GDU of the crop for the corresponding historical date, where the historical GDU of the crop is measured in terms of a daily temperature and a daily humidity of an environment, for each day, where the crop cultivated;

pre-processing the historical CMV data for each day of a plurality of days, to obtain a pre-processed historical CMV data for each day of the plurality of days, wherein the pre-processing comprises transforming non-stationary format of the historical CMV data for each day into a stationary format;

performing an auto regression analysis on the pre-processed historical CMV data for each day of the plurality of days, to obtain an initial CMV estimated model; and

carrying out a residual analysis on the initial CMV estimated model, based on a residual threshold, to obtain the CMV prediction model.

9. The system as claimed in claim 6, wherein the one or more hardware processors (104) are configured by the instructions to determine, for each initial planting schedule of the plurality of initial planting schedules, i) an initial harvest schedule, ii) an initial weekly production capacity of the crop from each crop field of the one or more crop fields, and iii) a fitness value, based on the i) CMV data for each day of the planting period and the harvest period, ii) the weekly storage capacity for each week during the harvest period, iii) the required CMV of the crop, and iv) the estimated weekly production capacity of the crop from each crop field of the one or more crop fields, by:

computing an out-of-bound correction delay for each crop field present in the initial planting schedule, based on an initial out-of-bound correction delay and a number of days in the planting period;

determining an initial planting date for each crop field present in the initial planting schedule, based on an early planting date and the out-of-bound correction delay for the corresponding crop field, wherein the early planting date is the first planting day present in the planting period;

determining a cumulative CMV value and a required number of days, for each crop field present in the initial planting schedule, based on the CMV data for each day of the planting period and the required CMV of the crop cultivated in the corresponding crop field;

determining an initial harvest date for each crop field present in the initial planting schedule, based on the initial planting date and the required number of days for the corresponding crop field;

forming one or more harvest weeks and determining the initial harvest schedule, for each crop field, based on the initial harvest date of the corresponding crop field and the harvest period;

determining the initial weekly production capacity of the crop from the one or more crop fields, based on the initial harvest schedule and the estimated weekly production capacity of the crop from the one or more crop fields; computing an excess production capacity for each harvest week of the one or more harvest weeks, based on the initial weekly production capacity of the crop from the one or more crop fields and the weekly storage capacity for each week during the harvest period; and

computing the fitness value of the initial planting schedule, based on the excess production capacity for each harvest week.

10. The system as claimed in claim 6, wherein the one or more hardware processors (104) are configured by the instructions to determine the plurality of successive planting schedules based on the plurality of initial planting schedules and the fitness value of each initial planting schedule, if the highest fitness value is less than or equal to the predefined fitness threshold value, by:

a) selecting a first set of successive planting schedules from the plurality of initial planting schedules, based on the sorting of the fitness value and a first threshold percentage and adding first set of successive planting schedules to the plurality of successive planting schedules;

b) choosing two initial planting schedules, randomly, from remaining of the plurality of initial planting schedules, based on the sorting of the fitness value and a second threshold percentage;

c) generating a new planting schedule from the choosing two initial planting schedules, based on a random threshold value and adding the generated planting schedule to the plurality of successive planting schedules; and

d) repeating the steps b) through c) until the number of the plurality of successive planting schedules is equal to the number of the plurality of initial planting schedules, to obtain the plurality of successive planting schedules.

11. One or more non-transitory machine-readable information storage mediums comprising one or more instructions which when executed by one or more hardware processors cause:

receiving i) a planting period and a harvest period, of the crop to be harvested in one or more crop fields, ii) a weekly storage capacity for each week during the harvest period, and iii) an estimated weekly production capacity of each crop field of the one or more crop fields, wherein the planting period of the crop is from a first planting day to a last planting day, and the harvest period of the crop is from a first harvest day to a last harvest day;

forecasting a cumulative maturity value, CMV, data for each day of the planting period and the harvest period of the crop, using a CMV prediction model, wherein the CMV data is associated with an environment where the crop is cultivated; and

predicting an optimized planting schedule, an optimized harvest schedule, and a weekly harvest quantity of the crop from each crop field of the one or more crop fields, based on i) the planting period and the harvest period of the crop, ii) the CMV data for each day of the planting period and the harvest period, iii) a weekly storage capacity for each week during the harvest period, and iv) an estimated weekly production capacity of the crop from each crop field of the one or more crop fields, using an optimization model , by:

a) receiving a required CMV of the crop to be cultivated in each crop field of the one or more crop fields;

b) obtaining a plurality of initial planting schedules based on the first planting day and the last planting day of the planting period, wherein each initial planting schedule comprises a randomly defined initial planting date for each crop field of the one or more crop fields from the planting period;

c) determining for each initial planting schedule of the plurality of initial planting schedules, i) an initial harvest schedule, ii) an initial weekly production capacity of the crop from each crop field of the one or more crop fields, and iii) a fitness value, based on the i) CMV data for each day of the planting period and the harvest period, ii) the weekly storage capacity for each week during the harvest period, iii) the required CMV of the crop, and iv) the estimated weekly production capacity of the crop from each crop field of the one or more crop fields;

d) sorting each initial planting schedule of the plurality of initial planting schedules, based on the corresponding fitness value, in a descending order;

e) choosing an initial planting schedule having a highest fitness value, among the plurality of initial planting schedules, from the sorting;

f) selecting i) the initial planting schedule having the highest fitness value as the optimized planting schedule, ii) the corresponding initial harvest schedule as the optimized harvest schedule, iii) the corresponding initial weekly production capacity as the weekly harvest quantity of the crop from each crop field of the one or more crop fields, if the highest fitness value is greater than a predefined fitness threshold value;

g) determining a plurality of successive planting schedules based on the plurality of initial planting schedules and the fitness value of each initial planting schedule, if the highest fitness value is less than or equal to the predefined fitness threshold value, wherein each successive planting schedule comprises a successive planting date for each crop field of the one or more crop fields from the planting period, and a number of the plurality of initial planting schedules is equal to the number of the plurality of successive planting schedules; and

h) repeating the steps c) through g), considering the plurality of successive planting schedules as the plurality of initial planting schedules, until the highest fitness value of a successive planting schedule is greater than the predefined fitness threshold value;

receiving an actual CMV data for each day of the planting period of the crop, through one or more sensors, wherein the actual CMV data is associated with the present environment where the crop is cultivated;

comparing the actual CMV data for each day of the planting period with the CMV data for each day of the planting period, to obtain a differential CMV value for each day of the planting period;

finetuning the CMV prediction model using the actual CMV data for each day of the planting period, from time to time, to obtain a finetuned CMV prediction model, if the differential CMV value for each day is greater than or equal to a predefined CMV threshold;

forecasting a successive CMV data for each day of the planting period, using the finetuned CMV prediction model;

predicting a successive optimized planting schedule, a successive optimized harvest schedule, and an actual successive weekly production capacity of the crop from each crop field of the one or more crop fields, from time to time, based on the optimized planting schedule, the optimized harvest schedule, the weekly harvest quantity of the crop, and the successive CMV data for each day of the planting period;

receiving an actual weekly storage capacity for each week during the harvest period;

comparing the actual weekly storage capacity for each week during the harvest period with the weekly storage capacity for the corresponding week during the harvest period, to obtain a differential weekly storage capacity value; and

predicting a successive optimized harvest schedule, and the actual successive weekly production capacity of the crop from each crop field of the one or more crop fields, from time to time, if the differential weekly storage capacity is greater than or equal to a predefined weekly storage capacity threshold, based on the optimized planting schedule, the optimized harvest schedule, the weekly harvest quantity of the crop, and the CMV data for each day of the planting period, and actual weekly storage capacity for each week during the harvest period.

## Patentansprüche

1. Prozessorimplementiertes Verfahren (200) zum Erzeugen eines optimierten Pflanzplans einer Ernte, um Lagerfähigkeiten zu überwinden, umfassend die folgenden Schritte:

Empfangen, über einen oder mehrere Hardwareprozessoren, i) einer Pflanzperiode und einer Ernteperiode der Ernte in einem oder mehreren Erntefeldern, ii) einer wöchentlichen Lagerkapazität für jede Woche während der Ernteperiode und iii) einer geschätzten wöchentlichen Produktionskapazität jedes Erntefelds des einen oder der mehreren Erntefelder, wobei die Pflanzperiode der Ernte von einem ersten Pflanztag bis zu einem letzten Pflanztag reicht und die Ernteperiode der Ernte von einem ersten Erntetag bis zu einem letzten Erntetag reicht (202);

Vorhersagen, über den einen oder die mehreren Hardwareprozessoren, von Daten eines kumulativen Reifewerts, CMV, für jeden Tag der Pflanzperiode und der Ernteperiode der Ernte unter Verwendung eines CMV-Vorhersagemodells, wobei die CMV-Daten einer Umgebung zugeordnet sind, in der die Ernte kultiviert wird (204); und

Vorhersagen, über den einen oder die mehreren Hardwareprozessoren, eines optimierten Pflanzplans, eines optimierten Ernteplans und einer wöchentlichen Erntemenge der Ernte aus jedem Erntefeld des einen oder der mehreren Erntefelder basierend auf i) der Pflanzperiode und der Ernteperiode der Ernte, ii) den CMV-Daten für jeden Tag der Pflanzperiode und der Ernteperiode, iii) einer wöchentlichen Lagerkapazität für jede Woche während der Ernteperiode und iv) einer geschätzten wöchentlichen Produktionskapazität der Ernte aus jedem Erntefeld des einen oder der mehreren Erntefelder unter Verwendung eines Optimierungsmodells (206) durch:

a) Empfangen eines erforderlichen CMV der Ernte, die in jedem Erntefeld des einen oder der mehreren Erntefelder kultiviert werden soll (206a);

b) Erhalten einer Mehrzahl von anfänglichen Pflanzplänen basierend auf dem ersten Pflanztag und dem letzten Pflanztag der Pflanzperiode, wobei jeder anfängliche Pflanzplan ein zufällig definiertes anfängliches Pflanzdatum für jedes Erntefeld des einen oder der mehreren Erntefelder aus der Pflanzperiode umfasst (206b);

c) Bestimmen, für jeden anfänglichen Pflanzplan der Mehrzahl von anfänglichen Pflanzplänen, i) eines anfänglichen Ernteplans, ii) einer anfänglichen wöchentlichen Produktionskapazität der Ernte aus jedem Erntefeld des einen oder der mehreren Erntefelder und iii) eines Fitnesswerts basierend auf i) den CMV-Daten für jeden Tag der Pflanzperiode und der Ernteperiode, ii) der wöchentlichen Lagerkapazität für jede Woche während der Ernteperiode, iii) dem erforderlichen CMV der Ernte und iv) der geschätzten wöchentlichen Produktionskapazität der Ernte aus jedem Erntefeld des einen oder der mehreren Erntefelder (206c);

d) Sortieren jedes anfänglichen Pflanzplans der Mehrzahl von anfänglichen Pflanzplänen basierend auf dem entsprechenden Fitnesswert in einer absteigenden Reihenfolge (206d);

e) Auswählen eines anfänglichen Pflanzplans mit einem höchsten Fitnesswert aus der Mehrzahl von anfänglichen Pflanzplänen aus dem Sortieren (206e);

f) Auswählen i) des anfänglichen Pflanzplans mit dem höchsten Fitnesswert als den optimierten Pflanzplan, ii) des entsprechenden anfänglichen Ernteplans als den optimierten Ernteplan, iii) der entsprechenden anfänglichen wöchentlichen Produktionskapazität als die wöchentliche Erntemenge der Ernte aus jedem Erntefeld des einen oder der mehreren Erntefelder, wenn der höchste Fitnesswert größer als ein vordefinierter Fitnessschwellenwert ist (206f);

g) Bestimmen einer Mehrzahl von aufeinanderfolgenden Pflanzplänen basierend auf der Mehrzahl von anfänglichen Pflanzplänen und dem Fitnesswert jedes anfänglichen Pflanzplans, wenn der höchste Fitnesswert kleiner oder gleich dem vordefinierten Fitnessschwellenwert ist, wobei jeder aufeinanderfolgende Pflanzplan ein aufeinanderfolgendes Pflanzdatum für jedes Erntefeld des einen oder der mehreren Erntefelder aus der Pflanzperiode umfasst und eine Anzahl der Mehrzahl von anfänglichen Pflanzplänen gleich der Anzahl der Mehrzahl von aufeinanderfolgenden Pflanzplänen ist (206g); und

h) Wiederholen der Schritte c) bis g) unter Berücksichtigung der Mehrzahl von aufeinanderfolgenden Pflanzplänen als die Mehrzahl von anfänglichen Pflanzplänen, bis der höchste Fitnesswert eines aufeinanderfolgenden Pflanzplans größer als der vordefinierte Fitnessschwellenwert ist (206h);

Empfangen, über den einen oder die mehreren Hardwareprozessoren, von tatsächlichen CMV-Daten für jeden Tag der Pflanzperiode der Ernte durch einen oder mehrere Sensoren, wobei die tatsächlichen CMV-Daten der gegenwärtigen Umgebung zugeordnet sind, in der die Ernte kultiviert wird (208);

Vergleichen, über den einen oder die mehreren Hardwareprozessoren, der tatsächlichen CMV-Daten für jeden Tag der Pflanzperiode mit den CMV-Daten für jeden Tag der Pflanzperiode, um einen Differenz-CMV-Wert für jeden Tag der Pflanzperiode zu erhalten (210);

Feinabstimmen, über den einen oder die mehreren Hardwareprozessoren, des CMV-Vorhersagemodells unter Verwendung der tatsächlichen CMV-Daten für jeden Tag der Pflanzperiode von Zeit zu Zeit, um ein feinabgestimmtes CMV-Vorhersagemodell zu erhalten, wenn der Differenz-CMV-Wert für jeden Tag größer oder gleich einem vordefinierten CMV-Schwellenwert ist (212);

Vorhersagen, über den einen oder die mehreren Hardwareprozessoren, von aufeinanderfolgenden CMV-Daten für jeden Tag der Pflanzperiode unter Verwendung des feinabgestimmten CMV-Vorhersagemodells (214);

Vorhersagen, über den einen oder die mehreren Hardwareprozessoren, eines aufeinanderfolgenden optimierten Pflanzplans, eines aufeinanderfolgenden optimierten Ernteplans und einer tatsächlichen aufeinanderfolgenden wöchentlichen Produktionskapazität der Ernte aus jedem Erntefeld des einen oder der mehreren Erntefelder von Zeit zu Zeit basierend auf dem optimierten Pflanzplan, dem optimierten Ernteplan, der wöchentlichen Erntemenge der Ernte und den aufeinanderfolgenden CMV-Daten für jeden Tag der Pflanzperiode (216);

Empfangen, über den einen oder die mehreren Hardwareprozessoren, einer tatsächlichen wöchentlichen Lagerkapazität für jede Woche während der Ernteperiode (218);

Vergleichen, über den einen oder die mehreren Hardwareprozessoren, der tatsächlichen wöchentlichen Lagerkapazität für jede Woche während der Ernteperiode mit der wöchentlichen Lagerkapazität für die entsprechende Woche während der Ernteperiode, um einen Differenz-wöchentlichen Lagerkapazitätswert zu erhalten (220); und

Vorhersagen, über den einen oder die mehreren Hardwareprozessoren, eines aufeinanderfolgenden optimierten Ernteplans und der tatsächlichen aufeinanderfolgenden wöchentlichen Produktionskapazität der Ernte aus jedem Erntefeld des einen oder der mehreren Erntefelder von Zeit zu Zeit, wenn die Differenz-wöchentliche Lagerkapazität größer oder gleich einem vordefinierten wöchentlichen Lagerkapazitätsschwellenwert ist, basierend auf dem optimierten Pflanzplan, dem optimierten Ernteplan, der wöchentlichen Erntemenge der Ernte und den CMV-Daten für jeden Tag der Pflanzperiode und der tatsächlichen wöchentlichen Lagerkapazität für jede Woche während der Ernteperiode (222).

2. Verfahren nach Anspruch 1, wobei:

i) die CMV-Daten für jeden Tag der Pflanzperiode ein Datum des Tages und eine Wachstumsgradeinheit, GDU, der Ernte für das entsprechende Datum umfassen; und

ii) die CMV-Daten für jeden Tag der Ernteperiode das Datum des Tages und die GDU der Ernte für das entsprechende Datum umfassen, wobei die GDU der Ernte in Bezug auf eine tägliche Temperatur und eine tägliche Feuchtigkeit der Umgebung für jeden Tag, an dem die Ernte kultiviert wird, gemessen wird.

3. Verfahren nach Anspruch 1, wobei das CMV-Vorhersagemodell erhalten wird durch:

Empfangen von historischen CMV-Daten für jeden Tag einer Mehrzahl von Tagen, wobei die historischen CMV-Daten der Umgebung zugeordnet sind, in der die Ernte kultiviert wird, und die historischen CMV-Daten für jeden Tag ein historisches Datum des Tages und eine historische Wachstumsgradeinheit, GDU, der Ernte für das entsprechende historische Datum umfassen, wobei die historische GDU der Ernte in Bezug auf eine tägliche Temperatur und eine tägliche Feuchtigkeit einer Umgebung für jeden Tag, an dem die Ernte kultiviert wird, gemessen wird;

Vorverarbeiten der historischen CMV-Daten für jeden Tag einer Mehrzahl von Tagen, um vorverarbeitete historische CMV-Daten für jeden Tag der Mehrzahl von Tagen zu erhalten, wobei das Vorverarbeiten das Umwandeln eines nicht stationären Formats der historischen CMV-Daten für jeden Tag in ein stationäres Format umfasst;

Durchführen einer Autoregressionsanalyse an den vorverarbeiteten historischen CMV-Daten für jeden Tag der Mehrzahl von Tagen, um ein anfängliches geschätztes CMV-Modell zu erhalten; und

Durchführen einer Restanalyse an dem anfänglichen geschätzten CMV-Modell, basierend auf einem Restschwellenwert, um das CMV-Vorhersagemodell zu erhalten.

4. Verfahren nach Anspruch 1, wobei das Bestimmen, für jeden anfänglichen Pflanzplan der Mehrzahl von anfänglichen Pflanzplänen, i) eines anfänglichen Ernteplans, ii) einer anfänglichen wöchentlichen Produktionskapazität der Ernte aus jedem Erntefeld des einen oder der mehreren Erntefelder und iii) eines Fitnesswerts basierend auf i) den CMV-Daten für jeden Tag der Pflanzperiode und der Ernteperiode, ii) der wöchentlichen Lagerkapazität für jede Woche während der Ernteperiode, iii) dem erforderlichen CMV der Ernte und iv) der geschätzten wöchentlichen Produktionskapazität der Ernte aus jedem Erntefeld des einen oder der mehreren Erntefelder umfasst:

Berechnen einer ungebundenen Korrekturverzögerung für jedes Erntefeld, das in dem anfänglichen Pflanzplan vorhanden ist, basierend auf einer anfänglichen ungebundenen Korrekturverzögerung und einer Anzahl von Tagen in der Pflanzperiode (206c1);

Bestimmen eines anfänglichen Pflanzdatums für jedes Erntefeld, das in dem anfänglichen Pflanzplan vorhanden ist, basierend auf einem frühen Pflanzdatum und der ungebundenen Korrekturverzögerung für das entsprechende Erntefeld, wobei das frühe Pflanzdatum der erste Pflanztag ist, der in der Pflanzperiode vorhanden ist (206c2);

Bestimmen eines kumulativen CMV-Werts und einer erforderlichen Anzahl von Tagen für jedes Erntefeld, das in dem anfänglichen Pflanzplan vorhanden ist, basierend auf den CMV-Daten für jeden Tag der Pflanzperiode und dem erforderlichen CMV der Ernte, die in dem entsprechenden Erntefeld kultiviert wurde (206c3);

Bestimmen eines anfänglichen Erntedatums für jedes Erntefeld, das in dem anfänglichen Pflanzplan vorhanden ist, basierend auf dem anfänglichen Pflanzdatum und der erforderlichen Anzahl von Tagen für das entsprechende Erntefeld (206c4);

Bilden einer oder mehrerer Erntewochen und Bestimmen des anfänglichen Ernteplans für jedes Erntefeld basierend auf dem anfänglichen Erntedatum des entsprechenden Erntefelds und der Ernteperiode (206c5);

Bestimmen der anfänglichen wöchentlichen Produktionskapazität der Ernte aus dem einen oder den mehreren Erntefeldern basierend auf dem anfänglichen Ernteplan und der geschätzten wöchentlichen Produktionskapazität der Ernte aus dem einen oder den mehreren Erntefeldern (206c6);

Berechnen einer überschüssigen Produktionskapazität für jede Erntewoche der einen oder mehreren Erntewochen basierend auf der anfänglichen wöchentlichen Produktionskapazität der Ernte aus dem einen oder den mehreren Erntefeldern und der wöchentlichen Lagerkapazität für jede Woche während der Ernteperiode (206c7); und

Berechnen des Fitnesswerts des anfänglichen Pflanzplans basierend auf der überschüssigen Produktionskapazität für jede Erntewoche (206c8).

5. Verfahren nach Anspruch 1, wobei das Bestimmen der Mehrzahl von aufeinanderfolgenden Pflanzplänen basierend auf der Mehrzahl von anfänglichen Pflanzplänen und dem Fitnesswert jedes anfänglichen Pflanzplans, wenn der höchste Fitnesswert kleiner oder gleich dem vordefinierten Fitnessschwellenwert ist, Folgendes umfasst:

a) Auswählen eines ersten Satzes von aufeinanderfolgenden Pflanzplänen aus der Mehrzahl von anfänglichen Pflanzplänen basierend auf dem Sortieren des Fitnesswerts und eines ersten Schwellenprozentsatzes und Hinzufügen eines ersten Satzes von aufeinanderfolgenden Pflanzplänen zu der Mehrzahl von aufeinanderfolgenden Pflanzplänen (206g1);

b) zufälliges Auswählen von zwei anfänglichen Pflanzplänen aus den verbleibenden der Mehrzahl von anfäng-glichen Pflanzplänen basierend auf dem Sortieren des Fitnesswerts und eines zweiten Schwellenprozentsatzes (206g2);

c) Erzeugen eines neuen Pflanzplans aus dem Auswählen von zwei anfänglichen Pflanzplänen basierend auf einem zufälligen Schwellenwert und Hinzufügen des erzeugten Pflanzplans zu der Mehrzahl von aufeinanderfolgenden Pflanzplänen (206g3); und

d) Wiederholen der Schritte b) bis c), bis die Anzahl der Mehrzahl von aufeinanderfolgenden Pflanzplänen gleich der Anzahl der Mehrzahl von anfänglichen Pflanzplänen ist, um die Mehrzahl von aufeinanderfolgenden Pflanzplänen (206g4) zu erhalten.

**6.** System (100) zum Erzeugen eines optimierten Pflanzplans einer Ernte, um Lagerfähigkeiten zu überwinden, umfassend:

einen Speicher (102), der Anweisungen speichert;

eine oder mehrere Eingabe/Ausgabe(E/A)-Schnittstellen (106); und

einen oder mehrere Hardware-Prozessoren (104), die mit dem Speicher (102) über die eine oder die mehreren E/A-Schnittstellen (106) gekoppelt sind, wobei der eine oder die mehreren Hardware-Prozessoren (104) durch die Anweisungen konfiguriert sind zum:

Empfangen i) einer Pflanzperiode und einer Ernteperiode der Ernte in einem oder mehreren Erntefeldern, ii) einer wöchentlichen Lagerkapazität für jede Woche während der Ernteperiode und iii) einer geschätzten wöchentlichen Produktionskapazität jedes Erntefelds des einen oder der mehreren Erntefelder, wobei die Pflanzperiode der Ernte von einem ersten Pflanztag bis zu einem letzten Pflanztag reicht und die Ernteperiode der Ernte von einem ersten Erntetag bis zu einem letzten Erntetag reicht;

Vorhersagen von Daten eines kumulativen Reifewerts, CMV, für jeden Tag der Pflanzperiode und der Ernteperiode der Ernte unter Verwendung eines CMV-Vorhersagemodells, wobei die CMV-Daten einer Umgebung zugeordnet sind, in der die Ernte kultiviert wird; und

Vorhersagen eines optimierten Pflanzplans, eines optimierten Ernteplans und einer wöchentlichen Erntemenge der Ernte aus jedem Erntefeld des einen oder der mehreren Erntefelder basierend auf i) der Pflanzperiode und der Ernteperiode der Ernte, ii) den CMV-Daten für jeden Tag der Pflanzperiode und der Ernteperiode, iii) einer wöchentlichen Lagerkapazität für jede Woche während der Ernteperiode und iv) einer geschätzten wöchentlichen Produktionskapazität der Ernte aus jedem Erntefeld des einen oder der mehreren Erntefelder unter Verwendung eines Optimierungsmodells durch:

a) Empfangen eines erforderlichen CMV der Ernte, die in jedem Erntefeld des einen oder der mehreren Erntefelder kultiviert werden soll;

b) Erhalten einer Mehrzahl von anfänglichen Pflanzplänen basierend auf dem ersten Pflanztag und dem letzten Pflanztag der Pflanzperiode, wobei jeder anfängliche Pflanzplan ein zufällig definiertes anfängliches Pflanzdatum für jedes Erntefeld des einen oder der mehreren Erntefelder aus der Pflanzperiode umfasst;

c) Bestimmen, für jeden anfänglichen Pflanzplan der Mehrzahl von anfänglichen Pflanzplänen, i) eines anfänglichen Ernteplans, ii) einer anfänglichen wöchentlichen Produktionskapazität der Ernte aus jedem Erntefeld des einen oder der mehreren Erntefelder und iii) eines Fitnesswerts basierend auf i) den CMV-Daten für jeden Tag der Pflanzperiode und der Ernteperiode, ii) der wöchentlichen Lagerkapazität für jede Woche während der Ernteperiode, iii) dem erforderlichen CMV der Ernte und iv) der geschätzten wöchentlichen Produktionskapazität der Ernte aus jedem Erntefeld des einen oder der mehreren Erntefelder;

d) Sortieren jedes anfänglichen Pflanzplans der Mehrzahl von anfänglichen Pflanzplänen basierend auf dem entsprechenden Fitnesswert in einer absteigenden Reihenfolge;

e) Auswählen eines anfänglichen Pflanzplans mit einem höchsten Fitnesswert aus der Mehrzahl von anfänglichen Pflanzplänen aus dem Sortieren;

f) Auswählen i) des anfänglichen Pflanzplans mit dem höchsten Fitnesswert als den optimierten Pflanzplan, ii) des entsprechenden anfänglichen Ernteplans als den optimierten Ernteplan, iii) der entsprechenden anfänglichen wöchentlichen Produktionskapazität als die wöchentliche Erntemenge der Ernte aus jedem Erntefeld des einen oder der mehreren Erntefelder, wenn der höchste Fitnesswert größer als ein vordefinierter Fitnessschwellenwert ist;

g) Bestimmen einer Mehrzahl von aufeinanderfolgenden Pflanzplänen basierend auf der Mehrzahl von anfänglichen Pflanzplänen und dem Fitnesswert jedes anfänglichen Pflanzplans, wenn der höchste Fitnesswert kleiner oder gleich dem vordefinierten Fitnessschwellenwert ist, wobei jeder aufeinanderfolgende Pflanzplan ein aufeinanderfolgendes Pflanzdatum für jedes Erntefeld des einen oder der mehreren Erntefelder aus der Pflanzperiode umfasst und eine Anzahl der Mehrzahl von anfänglichen Pflanzplänen gleich der Anzahl der Mehrzahl von aufeinanderfolgenden Pflanzplänen ist; und

h) Wiederholen der Schritte c) bis g) unter Berücksichtigung der Mehrzahl von aufeinanderfolgenden Pflanzplänen als die Mehrzahl von anfänglichen Pflanzplänen, bis der höchste Fitnesswert eines aufeinanderfolgenden Pflanzplans größer als der vordefinierte Fitnessschwellenwert ist;

Empfangen von tatsächlichen CMV-Daten für jeden Tag der Pflanzperiode der Ernte durch einen oder mehrere Sensoren, wobei die tatsächlichen CMV-Daten der gegenwärtigen Umgebung zugeordnet sind, in der die Ernte kultiviert wird;

Vergleichen der tatsächlichen CMV-Daten für jeden Tag der Pflanzperiode mit den CMV-Daten für jeden Tag der Pflanzperiode, um einen Differenz-CMV-Wert für jeden Tag der Pflanzperiode zu erhalten;

Feinabstimmen des CMV-Vorhersagemodells unter Verwendung der tatsächlichen CMV-Daten für jeden Tag der Pflanzperiode von Zeit zu Zeit, um ein feinabgestimmtes CMV-Vorhersagemodell zu erhalten, wenn der Differenz-CMV-Wert für jeden Tag größer oder gleich einem vordefinierten CMV-Schwellenwert ist;

Vorhersagen von aufeinanderfolgenden CMV-Daten für jeden Tag der Pflanzperiode unter Verwendung des feinabgestimmten CMV-Vorhersagemodells;

Vorhersagen eines aufeinanderfolgenden optimierten Pflanzplans, eines aufeinanderfolgenden optimierten Ernteplans und einer tatsächlichen aufeinanderfolgenden wöchentlichen Produktionskapazität der Ernte aus jedem Erntefeld des einen oder der mehreren Erntefelder von Zeit zu Zeit basierend auf dem optimierten Pflanzplan, dem optimierten Ernteplan, der wöchentlichen Erntemenge der Ernte und den aufeinanderfolgenden CMV-Daten für jeden Tag der Pflanzperiode;

Empfangen einer tatsächlichen wöchentlichen Lagerkapazität für jede Woche während der Ernteperiode;

Vergleichen der tatsächlichen wöchentlichen Lagerkapazität für jede Woche während der Ernteperiode mit der wöchentlichen Lagerkapazität für die entsprechende Woche während der Ernteperiode, um einen Differenz-wöchentlichen Lagerkapazitätswert zu erhalten; und

Vorhersagen eines aufeinanderfolgenden optimierten Ernteplans und der tatsächlichen aufeinanderfolgenden wöchentlichen Produktionskapazität der Ernte aus jedem Erntefeld des einen oder der mehreren Erntefelder von Zeit zu Zeit, wenn die Differenz-wöchentliche Lagerkapazität größer oder gleich einem vordefinierten wöchentlichen Lagerkapazitätsschwellenwert ist, basierend auf dem optimierten Pflanzplan, dem optimierten Ernteplan, der wöchentlichen Erntemenge der Ernte und den CMV-Daten für jeden Tag der Pflanzperiode und der tatsächlichen wöchentlichen Lagerkapazität für jede Woche während der Ernteperiode.

7.  System nach Anspruch 6, wobei:

    i) die CMV-Daten für jeden Tag der Pflanzperiode ein Datum des Tages und eine Wachstumsgradeinheit, GDU, der Ernte für das entsprechende Datum umfassen; und

    ii) die CMV-Daten für jeden Tag der Ernteperiode das Datum des Tages und die GDU der Ernte für das entsprechende Datum umfassen, wobei die GDU der Ernte in Bezug auf eine tägliche Temperatur und eine tägliche Feuchtigkeit der Umgebung für jeden Tag, an dem die Ernte kultiviert wird, gemessen wird.

8.  System nach Anspruch 6, wobei der eine oder die mehreren Hardware-Prozessoren (104) durch die Anweisungen konfiguriert sind zum Erhalten des CMV-Vorhersagemodells durch:

    Empfangen von historischen CMV-Daten für jeden Tag einer Mehrzahl von Tagen, wobei die historischen CMV-Daten der Umgebung zugeordnet sind, in der die Ernte kultiviert wird, und die historischen CMV-Daten für jeden Tag ein historisches Datum des Tages und eine historische Wachstumsgradeinheit, GDU, der Ernte für das entsprechende historische Datum umfassen, wobei die historische GDU der Ernte in Bezug auf eine tägliche Temperatur und eine tägliche Feuchtigkeit einer Umgebung für jeden Tag, an dem die Ernte kultiviert wird, gemessen wird;

    Vorverarbeiten der historischen CMV-Daten für jeden Tag einer Mehrzahl von Tagen, um vorverarbeitete historische CMV-Daten für jeden Tag der Mehrzahl von Tagen zu erhalten, wobei das Vorverarbeiten das Umwandeln eines nicht stationären Formats der historischen CMV-Daten für jeden Tag in ein stationäres Format umfasst;

Durchführen einer Autoregressionsanalyse an den vorverarbeiteten historischen CMV-Daten für jeden Tag der Mehrzahl von Tagen, um ein anfängliches geschätztes CMV-Modell zu erhalten; und

Durchführen einer Restanalyse an dem anfänglichen geschätzten CMV-Modell, basierend auf einem Restschwellenwert, um das CMV-Vorhersagemodell zu erhalten.

9. System nach Anspruch 6, wobei der eine oder die mehreren Hardware-Prozessoren (104) durch die Anweisungen konfiguriert sind zum Bestimmen, für jeden anfänglichen Pflanzplan der Mehrzahl von anfänglichen Pflanzplänen, i) eines anfänglichen Ernteplans, ii) einer anfänglichen wöchentlichen Produktionskapazität der Ernte aus jedem Erntefeld des einen oder der mehreren Erntefelder und iii) eines Fitnesswerts basierend auf i) den CMV-Daten für jeden Tag der Pflanzperiode und der Ernteperiode, ii) der wöchentlichen Lagerkapazität für jede Woche während der Ernteperiode, iii) dem erforderlichen CMV der Ernte und iv) der geschätzten wöchentlichen Produktionskapazität der Ernte aus jedem Erntefeld des einen oder der mehreren Erntefelder durch:

Berechnen einer ungebundenen Korrekturverzögerung für jedes Erntefeld, das in dem anfänglichen Pflanzplan vorhanden ist, basierend auf einer anfänglichen ungebundenen Korrekturverzögerung und einer Anzahl von Tagen in der Pflanzperiode;

Bestimmen eines anfänglichen Pflanzdatums für jedes Erntefeld, das in dem anfänglichen Pflanzplan vorhanden ist, basierend auf einem frühen Pflanzdatum und der ungebundenen Korrekturverzögerung für das entsprechende Erntefeld, wobei das frühe Pflanzdatum der erste Pflanztag ist, der in der Pflanzperiode vorhanden ist;

Bestimmen eines kumulativen CMV-Werts und einer erforderlichen Anzahl von Tagen für jedes Erntefeld, das in dem anfänglichen Pflanzplan vorhanden ist, basierend auf den CMV-Daten für jeden Tag der Pflanzperiode und dem erforderlichen CMV der Ernte, die in dem entsprechenden Erntefeld kultiviert wurde;

Bestimmen eines anfänglichen Erntedatums für jedes Erntefeld, das in dem anfänglichen Pflanzplan vorhanden ist, basierend auf dem anfänglichen Pflanzdatum und der erforderlichen Anzahl von Tagen für das entsprechende Erntefeld;

Bilden einer oder mehrerer Erntewochen und Bestimmen des anfänglichen Ernteplans für jedes Erntefeld basierend auf dem anfänglichen Erntedatum des entsprechenden Erntefelds und der Ernteperiode;

Bestimmen der anfänglichen wöchentlichen Produktionskapazität der Ernte aus dem einen oder den mehreren Erntefeldern basierend auf dem anfänglichen Ernteplan und der geschätzten wöchentlichen Produktionskapazität der Ernte aus dem einen oder den mehreren Erntefeldern;

Berechnen einer überschüssigen Produktionskapazität für jede Erntewoche der einen oder mehreren Erntewochen basierend auf der anfänglichen wöchentlichen Produktionskapazität der Ernte aus dem einen oder den mehreren Erntefeldern und der wöchentlichen Lagerkapazität für jede Woche während der Ernteperiode; und

Berechnen des Fitnesswerts des anfänglichen Pflanzplans basierend auf der überschüssigen Produktionskapazität für jede Erntewoche.

10. System nach Anspruch 6, wobei der eine oder die mehreren Hardware-Prozessoren (104) durch die Anweisungen konfiguriert sind zum Bestimmen der Mehrzahl von aufeinanderfolgenden Pflanzplänen basierend auf der Mehrzahl von anfänglichen Pflanzplänen und dem Fitnesswert jedes anfänglichen Pflanzplans, wenn der höchste Fitnesswert kleiner oder gleich dem vordefinierten Fitnessschwellenwert ist, durch:

a) Auswählen eines ersten Satzes von aufeinanderfolgenden Pflanzplänen aus der Mehrzahl von anfänglichen Pflanzplänen basierend auf dem Sortieren des Fitnesswerts und eines ersten Schwellenprozentsatzes und Hinzufügen eines ersten Satzes von aufeinanderfolgenden Pflanzplänen zu der Mehrzahl von aufeinanderfolgenden Pflanzplänen;

b) zufälliges Auswählen von zwei anfänglichen Pflanzplänen aus den verbleibenden der Mehrzahl von anfänglichen Pflanzplänen basierend auf dem Sortieren des Fitnesswerts und eines zweiten Schwellenprozentsatzes;

c) Erzeugen eines neuen Pflanzplans aus dem Auswählen von zwei anfänglichen Pflanzplänen basierend auf einem zufälligen Schwellenwert und Hinzufügen des erzeugten Pflanzplans zu der Mehrzahl von aufeinanderfolgenden Pflanzplänen; und

d) Wiederholen der Schritte b) bis c), bis die Anzahl der Mehrzahl von aufeinanderfolgenden Pflanzplänen gleich der Anzahl der Mehrzahl von anfänglichen Pflanzplänen ist, um die Mehrzahl von aufeinanderfolgenden Pflanzplänen zu erhalten.

11. Ein oder mehrere nichtflüchtige maschinenlesbare Informationsspeichermedien, umfassend eine oder mehrere Anweisungen, die bei Ausführung durch einen oder mehrere Hardwareprozessoren bewirken:

Empfangen i) einer Pflanzperiode und einer Ernteperiode der Ernte in einem oder mehreren Erntefeldern, ii) einer wöchentlichen Lagerkapazität für jede Woche während der Ernteperiode und iii) einer geschätzten wöchentlichen Produktionskapazität jedes Erntefelds des einen oder der mehreren Erntefelder, wobei die Pflanzperiode der Ernte von einem ersten Pflanztag bis zu einem letzten Pflanztag reicht und die Ernteperiode der Ernte von einem ersten Erntetag bis zu einem letzten Erntetag reicht;

Vorhersagen von Daten eines kumulativen Reifewerts, CMV, für jeden Tag der Pflanzperiode und der Ernteperiode der Ernte unter Verwendung eines CMV-Vorhersagemodells, wobei die CMV-Daten einer Umgebung zugeordnet sind, in der die Ernte kultiviert wird; und

Vorhersagen eines optimierten Pflanzplans, eines optimierten Ernteplans und einer wöchentlichen Erntemenge der Ernte aus jedem Erntefeld des einen oder der mehreren Erntefelder basierend auf i) der Pflanzperiode und der Ernteperiode der Ernte, ii) den CMV-Daten für jeden Tag der Pflanzperiode und der Ernteperiode, iii) einer wöchentlichen Lagerkapazität für jede Woche während der Ernteperiode und iv) einer geschätzten wöchentlichen Produktionskapazität der Ernte aus jedem Erntefeld des einen oder der mehreren Erntefelder unter Verwendung eines Optimierungsmodells durch:

a) Empfangen eines erforderlichen CMV der Ernte, die in jedem Erntefeld des einen oder der mehreren Erntefelder kultiviert werden soll;

b) Erhalten einer Mehrzahl von anfänglichen Pflanzplänen basierend auf dem ersten Pflanztag und dem letzten Pflanztag der Pflanzperiode, wobei jeder anfängliche Pflanzplan ein zufällig definiertes anfängliches Pflanzdatum für jedes Erntefeld des einen oder der mehreren Erntefelder aus der Pflanzperiode umfasst;

c) Bestimmen, für jeden anfänglichen Pflanzplan der Mehrzahl von anfänglichen Pflanzplänen, i) eines anfänglichen Ernteplans, ii) einer anfänglichen wöchentlichen Produktionskapazität der Ernte aus jedem Erntefeld des einen oder der mehreren Erntefelder und iii) eines Fitnesswerts basierend auf i) den CMV-Daten für jeden Tag der Pflanzperiode und der Ernteperiode, ii) der wöchentlichen Lagerkapazität für jede Woche während der Ernteperiode, iii) dem erforderlichen CMV der Ernte und iv) der geschätzten wöchentlichen Produktionskapazität der Ernte aus jedem Erntefeld des einen oder der mehreren Erntefelder;

d) Sortieren jedes anfänglichen Pflanzplans der Mehrzahl von anfänglichen Pflanzplänen basierend auf dem entsprechenden Fitnesswert in einer absteigenden Reihenfolge;

e) Auswählen eines anfänglichen Pflanzplans mit einem höchsten Fitnesswert aus der Mehrzahl von anfänglichen Pflanzplänen aus dem Sortieren;

f) Auswählen i) des anfänglichen Pflanzplans mit dem höchsten Fitnesswert als den optimierten Pflanzplan, ii) des entsprechenden anfänglichen Ernteplans als den optimierten Ernteplan, iii) der entsprechenden anfänglichen wöchentlichen Produktionskapazität als die wöchentliche Erntemenge der Ernte aus jedem Erntefeld des einen oder der mehreren Erntefelder, wenn der höchste Fitnesswert größer als ein vordefinierter Fitnessschwellenwert ist;

g) Bestimmen einer Mehrzahl von aufeinanderfolgenden Pflanzplänen basierend auf der Mehrzahl von anfänglichen Pflanzplänen und dem Fitnesswert jedes anfänglichen Pflanzplans, wenn der höchste Fitnesswert kleiner oder gleich dem vordefinierten Fitnessschwellenwert ist, wobei jeder aufeinanderfolgende Pflanzplan ein aufeinanderfolgendes Pflanzdatum für jedes Erntefeld des einen oder der mehreren Erntefelder aus der Pflanzperiode umfasst und eine Anzahl der Mehrzahl von anfänglichen Pflanzplänen gleich der Anzahl der Mehrzahl von aufeinanderfolgenden Pflanzplänen ist; und

h) Wiederholen der Schritte c) bis g) unter Berücksichtigung der Mehrzahl von aufeinanderfolgenden Pflanzplänen als die Mehrzahl von anfänglichen Pflanzplänen, bis der höchste Fitnesswert eines aufeinanderfolgenden Pflanzplans größer als der vordefinierte Fitnessschwellenwert ist;

Empfangen von tatsächlichen CMV-Daten für jeden Tag der Pflanzperiode der Ernte durch einen oder mehrere Sensoren, wobei die tatsächlichen CMV-Daten der gegenwärtigen Umgebung zugeordnet sind, in der die Ernte kultiviert wird;

Vergleichen der tatsächlichen CMV-Daten für jeden Tag der Pflanzperiode mit den CMV-Daten für jeden Tag der Pflanzperiode, um einen Differenz-CMV-Wert für jeden Tag der Pflanzperiode zu erhalten;

Feinabstimmen des CMV-Vorhersagemodells unter Verwendung der tatsächlichen CMV-Daten für jeden Tag der Pflanzperiode von Zeit zu Zeit, um ein feinabgestimmtes CMV-Vorhersagemodell zu erhalten, wenn der Differenz-CMV-Wert für jeden Tag größer oder gleich einem vordefinierten CMV-Schwellenwert ist;

Vorhersagen von aufeinanderfolgenden CMV-Daten für jeden Tag der Pflanzperiode unter Verwendung des feinabgestimmten CMV-Vorhersagemodells;

Vorhersagen eines aufeinanderfolgenden optimierten Pflanzplans, eines aufeinanderfolgenden optimierten Ernteplans und einer tatsächlichen aufeinanderfolgenden wöchentlichen Produktionskapazität der Ernte aus jedem Erntefeld des einen oder der mehreren Erntefelder von Zeit zu Zeit basierend auf dem optimierten Pflanzplan, dem optimierten Ernteplan, der wöchentlichen Erntemenge der Ernte und den aufeinanderfolgenden CMV-Daten für jeden Tag der Pflanzperiode;

Empfangen einer tatsächlichen wöchentlichen Lagerkapazität für jede Woche während der Ernteperiode;

Vergleichen der tatsächlichen wöchentlichen Lagerkapazität für jede Woche während der Ernteperiode mit der wöchentlichen Lagerkapazität für die entsprechende Woche während der Ernteperiode, um einen Differenz-wöchentlichen Lagerkapazitätswert zu erhalten; und

Vorhersagen eines aufeinanderfolgenden optimierten Ernteplans und der tatsächlichen aufeinanderfolgenden wöchentlichen Produktionskapazität der Ernte aus jedem Erntefeld des einen oder der mehreren Erntefelder von Zeit zu Zeit, wenn die Differenz-wöchentliche Lagerkapazität größer oder gleich einem vordefinierten wöchentlichen Lagerkapazitätsschwellenwert ist, basierend auf dem optimierten Pflanzplan, dem optimierten Ernteplan, der wöchentlichen Erntemenge der Ernte und den CMV-Daten für jeden Tag der Pflanzperiode und der tatsächlichen wöchentlichen Lagerkapazität für jede Woche während der Ernteperiode.

## Revendications

1. Procédé mis en œuvre par processeur (200) pour générer un programme de plantation optimisé d'une culture pour gérer des contraintes de capacité de stockage, comprenant les étapes consistant à :

recevoir, via un ou plusieurs processeurs matériels, i) une période de plantation et une période de récolte, de la culture à récolter dans un ou plusieurs champs de culture, ii) une capacité de stockage hebdomadaire pour chaque semaine pendant la période de récolte, et iii) une capacité de production hebdomadaire estimée de chaque champ de culture des un ou plusieurs champs de culture, dans lequel la période de plantation de la culture est d'un premier jour de plantation à un dernier jour de plantation, et la période de récolte de la culture est d'un premier jour de récolte à un dernier jour de récolte (202) ;

prévoir, via les un ou plusieurs processeurs matériels, des données de valeur de maturité cumulative, CMV, pour chaque jour de la période de plantation et de la période de récolte de la culture, en utilisant un modèle de prédiction de CMV, dans lequel les données de CMV sont associées à un environnement dans lequel la culture est cultivée (204) ; et

prédire, via les un ou plusieurs processeurs matériels, un programme de plantation optimisé, un programme de récolte optimisé, et une quantité de récolte hebdomadaire de la culture à partir de chaque champ de culture des un ou plusieurs champs de culture, sur la base i) de la période de plantation et de la période de récolte de la culture, ii) des données de CMV pour chaque jour de la période de plantation et de la période de récolte, iii) d'une capacité de stockage hebdomadaire pour chaque semaine pendant la période de récolte, et iv) d'une capacité de production hebdomadaire estimée de la culture à partir de chaque champ de culture des un ou plusieurs champs de culture, en utilisant un modèle d'optimisation (206), en :

a) recevant une CMV requise de la culture à cultiver dans chaque champ de culture des un ou plusieurs champs de culture (206a) ;

b) obtenant une pluralité de programmes de plantation initiaux sur la base du premier jour de plantation et du dernier jour de plantation de la période de plantation, dans lequel chaque programme de plantation initial comprend une date de plantation initiale définie de manière aléatoire pour chaque champ de culture des un ou plusieurs champs de culture à partir de la période de plantation (206b) ;

c) déterminant pour chaque programme de plantation initial de la pluralité de programmes de plantation initiaux, i) un programme de récolte initial, ii) une capacité de production hebdomadaire initiale de la culture à partir de chaque champ de culture des un ou plusieurs champs de culture, et iii) une valeur d'adéquation, sur la base i) des données de CMV pour chaque jour de la période de plantation et de la période de récolte, ii) de la capacité de stockage hebdomadaire pour chaque semaine pendant la période de récolte, iii) de la CMV requise de la culture, et iv) de la capacité de production hebdomadaire estimée de la culture à partir de chaque champ de culture des un ou plusieurs champs de culture (206c) ;

d) triant chaque programme de plantation initial de la pluralité de programmes de plantation initiaux, sur la base de la valeur d'adéquation correspondante, dans un ordre décroissant (206d) ;

e) choisissant un programme de plantation initial ayant une valeur d'adéquation la plus élevée, parmi la pluralité de programmes de plantation initiaux, à partir du tri (206e) ;

f) sélectionnant i) le programme de plantation initial ayant la valeur d'adéquation la plus élevée en tant que programme de plantation optimisé, ii) le programme de récolte initial correspondant en tant que programme de récolte optimisé, iii) la capacité de production hebdomadaire initiale correspondante en tant que quantité de récolte hebdomadaire de la culture à partir de chaque champ de culture des un ou plusieurs champs de culture, si la valeur d'adéquation la plus élevée est supérieure à une valeur de seuil d'adéquation prédéfinie (206f) ;

g) déterminant une pluralité de programmes de plantation successifs sur la base de la pluralité de programmes de plantation initiaux et de la valeur d'adéquation de chaque programme de plantation initial, si la valeur d'adéquation la plus élevée est inférieure ou égale à la valeur de seuil d'adéquation prédéfinie, dans lequel chaque programme de plantation successif comprend une date de plantation successive pour chaque champ de culture des un ou plusieurs champs de culture à partir de la période de plantation, et un nombre de la pluralité de programmes de plantation initiaux est égal au nombre de la pluralité de programmes de plantation successifs (206g) ; et

h) répétant les étapes c) à g), considérant la pluralité de programmes de plantation successifs en tant que pluralité de programmes de plantation initiaux, jusqu'à ce que la valeur d'adéquation la plus élevée d'un programme de plantation successif soit supérieure à la valeur de seuil d'adéquation prédéfinie (206h) ;

recevoir, via les un ou plusieurs processeurs matériels, des données de CMV réelles pour chaque jour de la période de plantation de la culture, via un ou plusieurs capteurs, dans lequel les données de CMV réelles sont associées à l'environnement présent dans lequel la culture est cultivée (208) ;

comparer, via les un ou plusieurs processeurs matériels, les données de CMV réelles pour chaque jour de la période de plantation avec les données de CMV pour chaque jour de la période de plantation, pour obtenir une valeur de CMV différentielle pour chaque jour de la période de plantation (210) ;

affiner, via les un ou plusieurs processeurs matériels, le modèle de prédiction de CMV en utilisant les données de CMV réelles pour chaque jour de la période de plantation, périodiquement, pour obtenir un modèle de prédiction de CMV affiné, si la valeur de CMV différentielle pour chaque jour est supérieure ou égale à un seuil de CMV prédéfini (212) ;

prévoir, via les un ou plusieurs processeurs matériels, des données de CMV successives pour chaque jour de la période de plantation, en utilisant le modèle de prédiction de CMV affiné (214) ;

prédire, via les un ou plusieurs processeurs matériels, un programme de plantation optimisé successif, un programme de récolte optimisé successif, et une capacité de production hebdomadaire successive réelle de la culture à partir de chaque champ de culture des un ou plusieurs champs de culture, périodiquement, sur la base du programme de plantation optimisé, du programme de récolte optimisé, de la quantité de récolte hebdomadaire de la culture, et des données de CMV successives pour chaque jour de la période de plantation (216) ;

recevoir, via les un ou plusieurs processeurs matériels, une capacité de stockage hebdomadaire réelle pour chaque semaine pendant la période de récolte (218) ;

comparer, via les un ou plusieurs processeurs matériels, la capacité de stockage hebdomadaire réelle pour chaque semaine pendant la période de récolte avec la capacité de stockage hebdomadaire pour la semaine correspondante pendant la période de récolte, pour obtenir une valeur de capacité de stockage hebdomadaire différentielle (220) ; et

prédire, via les un ou plusieurs processeurs matériels, un programme de récolte optimisé successif, et la capacité de production hebdomadaire successive réelle de la culture à partir de chaque champ de culture des un ou plusieurs champs de culture, périodiquement, si la capacité de stockage hebdomadaire différentielle est supérieure ou égale à un seuil de capacité de stockage hebdomadaire prédéfini, sur la base du programme de plantation optimisé, du programme de récolte optimisé, de la quantité de récolte hebdomadaire de la culture, et des données de CMV pour chaque jour de la période de plantation, et de la capacité de stockage hebdomadaire réelle pour chaque semaine pendant la période de récolte (222).

2. Procédé selon la revendication 1, dans lequel :

i) les données de CMV pour chaque jour de la période de plantation comprennent une date du jour et une unité de degré de croissance, GDU, de la culture pour la date correspondante ; et

ii) les données de CMV pour chaque jour de la période de récolte comprennent la date du jour et la GDU de la culture pour la date correspondante, dans lequel la GDU de la culture est mesurée en termes de température quotidienne et d'humidité quotidienne de l'environnement, pour chaque jour, où la culture est cultivée.

3. Procédé selon la revendication 1, dans lequel le modèle de prédiction de CMV est obtenu par :

la réception de données de CMV historiques pour chaque jour d'une pluralité de jours, dans lequel les données de CMV historiques sont associées à l'environnement dans lequel la culture est cultivée et les données de CMV historiques pour chaque jour comprennent une date historique du jour et une unité de degré de croissance historique, GDU, de la culture pour la date historique correspondante, où la GDU historique de la culture est mesurée en termes de température quotidienne et d'humidité quotidienne d'un environnement, pour chaque jour, où la culture est cultivée ;

le prétraitement des données de CMV historiques pour chaque jour d'une pluralité de jours, pour obtenir des données de CMV historiques prétraitées pour chaque jour de la pluralité de jours, dans lequel le prétraitement comprend la transformation d'un format non stationnaire des données de CMV historiques pour chaque jour en un format stationnaire ;

la réalisation d'une analyse d'autorégression sur les données de CMV historiques prétraitées pour chaque jour de la pluralité de jours, pour obtenir un modèle estimé de CMV initial ; et

la réalisation d'une analyse résiduelle sur le modèle estimé de CMV initial, sur la base d'un seuil résiduel, pour obtenir le modèle de prédiction de CMV.

4. Procédé selon la revendication 1, dans lequel la détermination pour chaque programme de plantation initial de la pluralité de programmes de plantation initiaux, i) d'un programme de récolte initial, ii) d'une capacité de production hebdomadaire initiale de la culture à partir de chaque champ de culture des un ou plusieurs champs de culture, et iii) d'une valeur d'adéquation, sur la base i) des données de CMV pour chaque jour de la période de plantation et de la période de récolte, ii) de la capacité de stockage hebdomadaire pour chaque semaine pendant la période de récolte, iii) de la CMV requise de la culture, et iv) de la capacité de production hebdomadaire estimée de la culture à partir de chaque champ de culture des un ou plusieurs champs de culture, comprend :

le calcul d'un délai de correction hors limite pour chaque champ de culture présent dans le programme de plantation initial, sur la base d'un délai de correction hors limite initial et d'un nombre de jours dans la période de plantation (206c1) ;

la détermination d'une date de plantation initiale pour chaque champ de culture présent dans le programme de plantation initial, sur la base d'une date de plantation précoce et du délai de correction hors limite pour le champ de culture correspondant, dans lequel la date de plantation précoce est le premier jour de plantation présent dans la période de plantation (206c2) ;

la détermination d'une valeur de CMV cumulative et d'un nombre de jours requis, pour chaque champ de culture présent dans le programme de plantation initial, sur la base des données de CMV pour chaque jour de la période de plantation et de la CMV requise de la culture cultivée dans le champ de culture correspondant (206c3) ;

la détermination d'une date de récolte initiale pour chaque champ de culture présent dans le programme de plantation initial, sur la base de la date de plantation initiale et du nombre de jours requis pour le champ de culture correspondant (206c4) ;

la formation d'une ou plusieurs semaines de récolte et la détermination du programme de récolte initial, pour chaque champ de culture, sur la base de la date de récolte initiale du champ de culture correspondant et de la période de récolte (206c5) ;

la détermination de la capacité de production hebdomadaire initiale de la culture à partir des un ou plusieurs champs de culture, sur la base du programme de récolte initial et de la capacité de production hebdomadaire estimée de la culture à partir des un ou plusieurs champs de culture (206c6) ;

le calcul d'une capacité de production excédentaire pour chaque semaine de récolte des une ou plusieurs semaines de récolte, sur la base de la capacité de production hebdomadaire initiale de la culture à partir des un ou plusieurs champs de culture et de la capacité de stockage hebdomadaire pour chaque semaine pendant la période de récolte (206c7) ; et

le calcul de la valeur d'adéquation du programme de plantation initial, sur la base de la capacité de production excédentaire pour chaque semaine de récolte (206c8).

5. Procédé selon la revendication 1, dans lequel la détermination de la pluralité de programmes de plantation successifs sur la base de la pluralité de programmes de plantation initiaux et de la valeur d'adéquation de chaque programme de plantation initial, si la valeur d'adéquation la plus élevée est inférieure ou égale à la valeur de seuil d'adéquation prédéfinie, comprend :

a) la sélection d'un premier ensemble de programmes de plantation successifs parmi la pluralité de programmes de plantation initiaux, sur la base du tri de la valeur d'adéquation et d'un premier pourcentage de seuil et l'ajout d'un premier ensemble de programmes de plantation successifs à la pluralité de programmes de plantation successifs (206g1) ;

b) le choix de deux programmes de plantation initiaux, de manière aléatoire, parmi les programmes restants de la pluralité de programmes de plantation initiaux, sur la base du tri de la valeur d'adéquation et d'un second pourcentage de seuil (206g2) ;

c) la génération d'un nouveau programme de plantation à partir du choix de deux programmes de plantation initiaux, sur la base d'une valeur de seuil aléatoire et l'ajout du programme de plantation généré à la pluralité de programmes de plantation successifs (206g3) ; et

d) la répétition des étapes b) à c) jusqu'à ce que le nombre de la pluralité de programmes de plantation successifs soit égal au nombre de la pluralité de programmes de plantation initiaux, pour obtenir la pluralité de programmes de plantation successifs (206g4).

6. Système (100) pour générer un programme de plantation optimisé d'une culture pour gérer des contraintes de capacité de stockage, comprenant :

une mémoire (102) stockant des instructions ;
une ou plusieurs interfaces d'entrée/sortie (E/S) (106) ; et
un ou plusieurs processeurs matériels (104) couplés à la mémoire (102) via les une ou plusieurs interfaces E/S (106), dans lequel les un ou plusieurs processeurs matériels (104) sont configurés par les instructions pour :

recevoir i) une période de plantation et une période de récolte, de la culture à récolter dans un ou plusieurs champs de culture, ii) une capacité de stockage hebdomadaire pour chaque semaine pendant la période de récolte, et iii) une capacité de production hebdomadaire estimée de chaque champ de culture des un ou plusieurs champs de culture, dans lequel la période de plantation de la culture est d'un premier jour de plantation à un dernier jour de plantation, et la période de récolte de la culture est d'un premier jour de récolte à un dernier jour de récolte ;

prévoir des données de valeur de maturité cumulative, CMV, pour chaque jour de la période de plantation et de la période de récolte de la culture, en utilisant un modèle de prédiction de CMV, dans lequel les données de CMV sont associées à un environnement dans lequel la culture est cultivée ; et

prédire un programme de plantation optimisé, un programme de récolte optimisé, et une quantité de récolte hebdomadaire de la culture à partir de chaque champ de culture des un ou plusieurs champs de culture, sur la base i) de la période de plantation et de la période de récolte de la culture, ii) des données de CMV pour chaque jour de la période de plantation et de la période de récolte, iii) d'une capacité de stockage hebdomadaire pour chaque semaine pendant la période de récolte, et iv) d'une capacité de production hebdomadaire estimée de la culture à partir de chaque champ de culture des un ou plusieurs champs de culture, en utilisant un modèle d'optimisation, en :

a) recevant une CMV requise de la culture à cultiver dans chaque champ de culture des un ou plusieurs champs de culture ;

b) obtenant une pluralité de programmes de plantation initiaux sur la base du premier jour de plantation et du dernier jour de plantation de la période de plantation, dans lequel chaque programme de plantation initial comprend une date de plantation initiale définie de manière aléatoire pour chaque champ de culture des un ou plusieurs champs de culture à partir de la période de plantation ;

c) déterminant pour chaque programme de plantation initial de la pluralité de programmes de plantation initiaux, i) un programme de récolte initial, ii) une capacité de production hebdomadaire initiale de la culture à partir de chaque champ de culture des un ou plusieurs champs de culture, et iii) une valeur d'adéquation, sur la base i) des données de CMV pour chaque jour de la période de plantation et de la période de récolte, ii) de la capacité de stockage hebdomadaire pour chaque semaine pendant la période de récolte, iii) de la CMV requise de la culture, et iv) de la capacité de production hebdomadaire estimée de la culture à partir de chaque champ de culture des un ou plusieurs champs de culture ;

d) triant chaque programme de plantation initial de la pluralité de programmes de plantation initiaux, sur la base de la valeur d'adéquation correspondante, dans un ordre décroissant ;

e) choisissant un programme de plantation initial ayant une valeur d'adéquation la plus élevée, parmi la pluralité de programmes de plantation initiaux, à partir du tri ;

f) sélectionnant i) le programme de plantation initial ayant la valeur d'adéquation la plus élevée en tant que programme de plantation optimisé, ii) le programme de récolte initial correspondant en tant que programme de récolte optimisé, iii) la capacité de production hebdomadaire initiale correspondante en tant que quantité de récolte hebdomadaire de la culture à partir de chaque champ de culture des un ou plusieurs champs de culture, si la valeur d'adéquation la plus élevée est supérieure à une valeur de seuil d'adéquation prédéfinie ;

g) déterminant une pluralité de programmes de plantation successifs sur la base de la pluralité de programmes de plantation initiaux et de la valeur d'adéquation de chaque programme de plantation initial, si la valeur d'adéquation la plus élevée est inférieure ou égale à la valeur de seuil d'adéquation prédéfinie, dans lequel chaque programme de plantation successif comprend une date de plantation successive pour chaque champ de culture des un ou plusieurs champs de culture à partir de la période de plantation, et un nombre de la pluralité de programmes de plantation initiaux est égal au nombre de la pluralité de programmes de plantation successifs ; et

h) répétant les étapes c) à g), considérant la pluralité de programmes de plantation successifs en tant que pluralité de programmes de plantation initiaux, jusqu'à ce que la valeur d'adéquation la plus élevée d'un programme de plantation successif soit supérieure à la valeur de seuil d'adéquation prédéfinie ;

recevoir des données de CMV réelles pour chaque jour de la période de plantation de la culture, via un ou plusieurs capteurs, dans lequel les données de CMV réelles sont associées à l'environnement présent dans lequel la culture est cultivée ;

comparer les données de CMV réelles pour chaque jour de la période de plantation avec les données de CMV pour chaque jour de la période de plantation, pour obtenir une valeur de CMV différentielle pour chaque jour de la période de plantation ;

affiner le modèle de prédiction de CMV en utilisant les données de CMV réelles pour chaque jour de la période de plantation, périodiquement, pour obtenir un modèle de prédiction de CMV affiné, si la valeur de CMV différentielle pour chaque jour est supérieure ou égale à un seuil de CMV prédéfini ;

prévoir des données de CMV successives pour chaque jour de la période de plantation, en utilisant le modèle de prédiction de CMV affiné ;

prédire un programme de plantation optimisé successif, un programme de récolte optimisé successif, et une capacité de production hebdomadaire successive réelle de la culture à partir de chaque champ de culture des un ou plusieurs champs de culture, périodiquement, sur la base du programme de plantation optimisé, du programme de récolte optimisé, de la quantité de récolte hebdomadaire de la culture, et des données de CMV successives pour chaque jour de la période de plantation ;

recevoir une capacité de stockage hebdomadaire réelle pour chaque semaine pendant la période de récolte ;

comparer la capacité de stockage hebdomadaire réelle pour chaque semaine pendant la période de récolte avec la capacité de stockage hebdomadaire pour la semaine correspondante pendant la période de récolte, pour obtenir une valeur de capacité de stockage hebdomadaire différentielle ; et

prédire un programme de récolte optimisé successif, et la capacité de production hebdomadaire successive réelle de la culture à partir de chaque champ de culture des un ou plusieurs champs de culture, périodiquement, si la capacité de stockage hebdomadaire différentielle est supérieure ou égale à un seuil de capacité de stockage hebdomadaire prédéfini, sur la base du programme de plantation optimisé, du programme de récolte optimisé, de la quantité de récolte hebdomadaire de la culture, et des données de CMV pour chaque jour de la période de plantation, et de la capacité de stockage hebdomadaire réelle pour chaque semaine pendant la période de récolte.

7. Système selon la revendication 6, dans lequel :

i) les données de CMV pour chaque jour de la période de plantation comprennent une date du jour et une unité de degré de croissance, GDU, de la culture pour la date correspondante ; et

ii) les données de CMV pour chaque jour de la période de récolte comprennent la date du jour et la GDU de la culture pour la date correspondante, dans lequel la GDU de la culture est mesurée en termes de température quotidienne et d'humidité quotidienne de l'environnement, pour chaque jour, où la culture est cultivée.

8. Système selon la revendication 6, dans lequel les un ou plusieurs processeurs matériels (104) sont configurés par les instructions pour obtenir le modèle de prédiction de CMV, par :

la réception de données de CMV historiques pour chaque jour d'une pluralité de jours, dans lequel les données de CMV historiques sont associées à l'environnement dans lequel la culture est cultivée et les données de CMV historiques pour chaque jour comprennent une date historique du jour et une unité de degré de croissance historique, GDU, de la culture pour la date historique correspondante, où la GDU historique de la culture est mesurée en termes de température quotidienne et d'humidité quotidienne d'un environnement, pour chaque jour, où la culture est cultivée ;

le prétraitement des données de CMV historiques pour chaque jour d'une pluralité de jours, pour obtenir des données de CMV historiques prétraitées pour chaque jour de la pluralité de jours, dans lequel le prétraitement comprend la transformation d'un format non stationnaire des données de CMV historiques pour chaque jour en un format stationnaire ;

la réalisation d'une analyse d'autorégression sur les données de CMV historiques prétraitées pour chaque jour de la pluralité de jours, pour obtenir un modèle estimé de CMV initial ; et

la réalisation d'une analyse résiduelle sur le modèle estimé de CMV initial, sur la base d'un seuil résiduel, pour obtenir le modèle de prédiction de CMV.

9. Système selon la revendication 6, dans lequel les un ou plusieurs processeurs matériels (104) sont configurés par les instructions pour déterminer, pour chaque programme de plantation initial de la pluralité de programmes de plantation initiaux, i) un programme de récolte initial, ii) une capacité de production hebdomadaire initiale de la culture à partir de chaque champ de culture des un ou plusieurs champs de culture, et iii) une valeur d'adéquation, sur la base i) des données de CMV pour chaque jour de la période de plantation et de la période de récolte, ii) de la capacité de stockage hebdomadaire pour chaque semaine pendant la période de récolte, iii) de la CMV requise de la culture, et iv) de la capacité de production hebdomadaire estimée de la culture à partir de chaque champ de culture des un ou plusieurs champs de culture, par :

le calcul d'un délai de correction hors limite pour chaque champ de culture présent dans le programme de plantation initial, sur la base d'un délai de correction hors limite initial et d'un nombre de jours dans la période de plantation ;
la détermination d'une date de plantation initiale pour chaque champ de culture présent dans le programme de plantation initial, sur la base d'une date de plantation précoce et du délai de correction hors limite pour le champ de culture correspondant, dans lequel la date de plantation précoce est le premier jour de plantation présent dans la période de plantation ;
la détermination d'une valeur de CMV cumulative et d'un nombre de jours requis, pour chaque champ de culture présent dans le programme de plantation initial, sur la base des données de CMV pour chaque jour de la période de plantation et de la CMV requise de la culture cultivée dans le champ de culture correspondant ;
la détermination d'une date de récolte initiale pour chaque champ de culture présent dans le programme de plantation initial, sur la base de la date de plantation initiale et du nombre de jours requis pour le champ de culture correspondant ;
la formation d'une ou plusieurs semaines de récolte et la détermination du programme de récolte initial, pour chaque champ de culture, sur la base de la date de récolte initiale du champ de culture correspondant et de la période de récolte ;
la détermination de la capacité de production hebdomadaire initiale de la culture à partir des un ou plusieurs champs de culture, sur la base du programme de récolte initial et de la capacité de production hebdomadaire estimée de la culture à partir des un ou plusieurs champs de culture ;
le calcul d'une capacité de production excédentaire pour chaque semaine de récolte des une ou plusieurs semaines de récolte, sur la base de la capacité de production hebdomadaire initiale de la culture à partir des un ou plusieurs champs de culture et de la capacité de stockage hebdomadaire pour chaque semaine pendant la période de récolte ; et
le calcul de la valeur d'adéquation du programme de plantation initial, sur la base de la capacité de production excédentaire pour chaque semaine de récolte.

10. Système selon la revendication 6, dans lequel les un ou plusieurs processeurs matériels (104) sont configurés par les instructions pour déterminer la pluralité de programmes de plantation successifs sur la base de la pluralité de programmes de plantation initiaux et de la valeur d'adéquation de chaque programme de plantation initial, si la valeur d'adéquation la plus élevée est inférieure ou égale à la valeur de seuil d'adéquation prédéfinie, par :

a) la sélection d'un premier ensemble de programmes de plantation successifs parmi la pluralité de programmes de plantation initiaux, sur la base du tri de la valeur d'adéquation et d'un premier pourcentage de seuil et l'ajout d'un premier ensemble de programmes de plantation successifs à la pluralité de programmes de plantation successifs ;
b) le choix de deux programmes de plantation initiaux, de manière aléatoire, parmi les programmes restants de la pluralité de programmes de plantation initiaux, sur la base du tri de la valeur d'adéquation et d'un second pourcentage de seuil ;
c) la génération d'un nouveau programme de plantation à partir du choix de deux programmes de plantation initiaux, sur la base d'une valeur de seuil aléatoire et l'ajout du programme de plantation généré à la pluralité de programmes de plantation successifs ; et
d) la répétition des étapes b) à c) jusqu'à ce que le nombre de la pluralité de programmes de plantation successifs soit égal au nombre de la pluralité de programmes de plantation initiaux, pour obtenir la pluralité de programmes de plantation successifs.

11. Un ou plusieurs supports de stockage d'informations lisibles par machine non transitoires comprenant une ou plusieurs instructions qui, lorsqu'elles sont exécutées par un ou plusieurs processeurs matériels, amènent :

la réception i) d'une période de plantation et d'une période de récolte, de la culture à récolter dans un ou plusieurs champs de culture, ii) d'une capacité de stockage hebdomadaire pour chaque semaine pendant la période de récolte, et iii) d'une capacité de production hebdomadaire estimée de chaque champ de culture des un ou plusieurs champs de culture, dans lequel la période de plantation de la culture est d'un premier jour de plantation à un dernier jour de plantation, et la période de récolte de la culture est d'un premier jour de récolte à un dernier jour de récolte ;

la prévision de données de valeur de maturité cumulative, CMV, pour chaque jour de la période de plantation et de la période de récolte de la culture, en utilisant un modèle de prédiction de CMV, dans lequel les données de CMV sont associées à un environnement dans lequel la culture est cultivée ; et

la prédiction d'un programme de plantation optimisé, d'un programme de récolte optimisé, et d'une quantité de récolte hebdomadaire de la culture à partir de chaque champ de culture des un ou plusieurs champs de culture, sur la base i) de la période de plantation et de la période de récolte de la culture, ii) des données de CMV pour chaque jour de la période de plantation et de la période de récolte, iii) d'une capacité de stockage hebdomadaire pour chaque semaine pendant la période de récolte, et iv) d'une capacité de production hebdomadaire estimée de la culture à partir de chaque champ de culture des un ou plusieurs champs de culture, en utilisant un modèle d'optimisation, en :

a) recevant une CMV requise de la culture à cultiver dans chaque champ de culture des un ou plusieurs champs de culture ;

b) obtenant une pluralité de programmes de plantation initiaux sur la base du premier jour de plantation et du dernier jour de plantation de la période de plantation, dans lequel chaque programme de plantation initial comprend une date de plantation initiale définie de manière aléatoire pour chaque champ de culture des un ou plusieurs champs de culture à partir de la période de plantation ;

c) déterminant pour chaque programme de plantation initial de la pluralité de programmes de plantation initiaux, i) un programme de récolte initial, ii) une capacité de production hebdomadaire initiale de la culture à partir de chaque champ de culture des un ou plusieurs champs de culture, et iii) une valeur d'adéquation, sur la base i) des données de CMV pour chaque jour de la période de plantation et de la période de récolte, ii) de la capacité de stockage hebdomadaire pour chaque semaine pendant la période de récolte, iii) de la CMV requise de la culture, et iv) de la capacité de production hebdomadaire estimée de la culture à partir de chaque champ de culture des un ou plusieurs champs de culture ;

d) triant chaque programme de plantation initial de la pluralité de programmes de plantation initiaux, sur la base de la valeur d'adéquation correspondante, dans un ordre décroissant ;

e) choisissant un programme de plantation initial ayant une valeur d'adéquation la plus élevée, parmi la pluralité de programmes de plantation initiaux, à partir du tri ;

f) sélectionnant i) le programme de plantation initial ayant la valeur d'adéquation la plus élevée en tant que programme de plantation optimisé, ii) le programme de récolte initial correspondant en tant que programme de récolte optimisé, iii) la capacité de production hebdomadaire initiale correspondante en tant que quantité de récolte hebdomadaire de la culture à partir de chaque champ de culture des un ou plusieurs champs de culture, si la valeur d'adéquation la plus élevée est supérieure à une valeur de seuil d'adéquation prédéfinie ;

g) déterminant une pluralité de programmes de plantation successifs sur la base de la pluralité de programmes de plantation initiaux et de la valeur d'adéquation de chaque programme de plantation initial, si la valeur d'adéquation la plus élevée est inférieure ou égale à la valeur de seuil d'adéquation prédéfinie, dans lequel chaque programme de plantation successif comprend une date de plantation successive pour chaque champ de culture des un ou plusieurs champs de culture à partir de la période de plantation, et un nombre de la pluralité de programmes de plantation initiaux est égal au nombre de la pluralité de programmes de plantation successifs ; et

h) répétant les étapes c) à g), considérant la pluralité de programmes de plantation successifs en tant que pluralité de programmes de plantation initiaux, jusqu'à ce que la valeur d'adéquation la plus élevée d'un programme de plantation successif soit supérieure à la valeur de seuil d'adéquation prédéfinie ;

la réception de données de CMV réelles pour chaque jour de la période de plantation de la culture, via un ou plusieurs capteurs, dans lequel les données de CMV réelles sont associées à l'environnement présent dans lequel la culture est cultivée ;

la comparaison des données de CMV réelles pour chaque jour de la période de plantation avec les données de CMV pour chaque jour de la période de plantation, pour obtenir une valeur de CMV différentielle pour chaque jour de la période de plantation ;

l'affinement du modèle de prédiction de CMV en utilisant les données de CMV réelles pour chaque jour de la période de plantation, périodiquement, pour obtenir un modèle de prédiction de CMV affiné, si la valeur de CMV différentielle pour chaque jour est supérieure ou égale à un seuil de CMV prédéfini ;

la prévision de données de CMV successives pour chaque jour de la période de plantation, en utilisant le modèle de prédiction de CMV affiné ;

la prédiction d'un programme de plantation optimisé successif, d'un programme de récolte optimisé successif, et d'une capacité de production hebdomadaire successive réelle de la culture à partir de chaque champ de culture des un ou plusieurs champs de culture, périodiquement, sur la base du programme de plantation optimisé, du programme de récolte optimisé, de la quantité de récolte hebdomadaire de la culture, et des données de CMV successives pour chaque jour de la période de plantation ;

la réception d'une capacité de stockage hebdomadaire réelle pour chaque semaine pendant la période de récolte ;

la comparaison de la capacité de stockage hebdomadaire réelle pour chaque semaine pendant la période de récolte avec la capacité de stockage hebdomadaire pour la semaine correspondante pendant la période de récolte, pour obtenir une valeur de capacité de stockage hebdomadaire différentielle ; et

la prédiction d'un programme de récolte optimisé successif, et de la capacité de production hebdomadaire successive réelle de la culture à partir de chaque champ de culture des un ou plusieurs champs de culture, périodiquement, si la capacité de stockage hebdomadaire différentielle est supérieure ou égale à un seuil de capacité de stockage hebdomadaire prédéfini, sur la base du programme de plantation optimisé, du programme de récolte optimisé, de la quantité de récolte hebdomadaire de la culture, et des données de CMV pour chaque jour de la période de plantation, et de la capacité de stockage hebdomadaire réelle pour chaque semaine pendant la période de récolte.

System **100**

**108**

Memory **102**

Modules **102a**

Repository
**102b**

I/O interface(s)
**106**

Hardware
processor(s)
**104**

FIG. 1

200

Receive (i) a planting period and a harvest period, of the crop to be harvested in one or more crop fields, (ii) a weekly storage capacity for each week during the harvest period, and (iii) an estimated weekly production capacity of each crop field of the one or more crop fields, wherein the planting period of the crop is from a first planting day to a last planting day, and the harvest period of the crop is from a first harvest day to a last harvest day 202

Forecast a cumulative maturity value (CMV) data for each day of the planting period and the harvest period of the crop, using a CMV prediction model, wherein the CMV data is associated with an environment where the crop is cultivated 204

Predict an optimized planting schedule, an optimized harvest schedule, and an actual weekly production capacity of the crop from each crop field of the one or more crop fields, based on (i) the planting period and the harvest period of the crop, (ii) the CMV data for each day of the planting period and the harvest period, (iii) a weekly storage capacity for each week during the harvest period, and (iv) an estimated weekly production capacity of the crop from each crop field of the one or more crop fields, using an optimization model (206), by:

Receiving a required CMV of the crop to be cultivated in each crop field of the one or more crop fields 206a

Obtaining a plurality of initial planting schedules based on the first planting day and the last planting day of the planting period, wherein each initial planting schedule comprises a randomly defined initial planting date for each crop field of the one or more crop fields from the planting period 206b

A

FIG. 2A

A

Determining for each initial planting schedule of the plurality of initial planting schedules, (i) an initial harvest schedule, (ii) an initial weekly production capacity of the crop from each crop field of the one or more crop fields, and (iii) a fitness value, based on the (i) CMV data for each day of the planting period and the harvest period, (ii) the weekly storage capacity for each week during the harvest period, (iii) the required CMV of the crop, and (iv) the estimated weekly production capacity of the crop from each crop field of the one or more crop fields **206c**

Sorting each initial planting schedule of the plurality of initial planting schedules, based on the corresponding fitness value, in a descending order **206d**

Choosing an initial planting schedule having a highest fitness value, among the plurality of initial planting schedules, from the sorting **206e**

Selecting (i) the initial planting schedule having the highest fitness value as the optimized planting schedule, (ii) the corresponding initial harvest schedule as the optimized harvest schedule, (iii) the corresponding initial weekly production capacity as the actual weekly production capacity of the crop from each crop field of the one or more crop fields, if the highest fitness value is greater than a predefined fitness threshold value **206f**

Determining a plurality of successive planting schedules based on the plurality of initial planting schedules and the fitness value of each initial planting schedule, if the highest fitness value is less than or equal to the predefined fitness threshold value, wherein each successive planting schedule comprises a successive planting date for each crop field of the one or more crop fields from the planting period, and a number of the plurality of initial planting schedules is equal to the number of the plurality of successive planting schedules **206g**

B

FIG. 2B

B

Repeating the steps (c) through (g), considering the plurality of successive planting schedules as the plurality of initial planting schedules, until the highest fitness value of a successive planting schedule is greater than the predefined fitness threshold value **206h**

Receive an actual CMV data for each day of the planting period of the crop, through one or more sensors, wherein the actual CMV data is associated with the present environment where the crop is cultivated **208**

Compare the actual CMV data for each day of the planting period with the CMV data for each day of the planting period, to obtain a differential CMV value for each day of the planting period **210**

Finetune the CMV prediction model using the actual CMV data for each day of the planting period, from time to time, to obtain a finetuned CMV prediction model, if the differential CMV value for each day is greater than or equal to a predefined CMV threshold **212**

Forecast a successive CMV data for each day of the planting period, using the finetuned CMV prediction model **214**

Predict a successive optimized planting schedule, a successive optimized harvest schedule, and an actual successive weekly production capacity of the crop from each crop field of the one or more crop fields, from time to time, based on (i) the optimized planting schedule, the optimized harvest schedule, the actual weekly production capacity of the crop, and the successive CMV data for each day of the planting period **216**

C

FIG. 2C

C

Receive an actual weekly storage capacity for each week during the harvest period **218**

Compare the actual weekly storage capacity for each week during the harvest period with the weekly storage capacity for the corresponding week during the harvest period, to obtain a differential weekly storage capacity value **220**

Predict a successive optimized harvest schedule, and an actual successive weekly production capacity of the crop from each crop field of the one or more crop fields, from time to time, if the differential weekly storage capacity is greater than or equal to a predefined weekly storage capacity threshold, based on the optimized planting schedule, the optimized harvest schedule, the actual weekly production capacity of the crop, and the CMV data for each day of the planting period, and actual weekly storage capacity for each week during the harvest period **222**

FIG. 2D

A single planting schedule, P

(N: total number of plots)

Delay (binary)
A binary vector of length B that represents planting delay
corresponding to the plot,
$W_{max}$ : largest planting window among all plots.
B: minimum number of bits required to represent $W_{max}$, as a
binary number.
(planting window = late_planting_date - early_planting_date)

Population of size K

FIG. 3

Computing an out-of-bound correction delay for each crop field present in the initial planting schedule, based on an initial out-of-bound correction delay and a number of days in the planting period **206c1**

Determining an initial planting date for each crop field present in the initial planting schedule, based on an early planting date and the out-of-bound correction delay for the corresponding crop field, wherein the early planting date is the first planting day present in the planting period **206c2**

Determining a cumulative CMV value and a required number of days, for each crop field present in the initial planting schedule, based on the CMV data for each day of the planting period and the required CMV of the crop cultivated in the corresponding crop field **206c3**

Determining an initial harvest date for each crop field present in the initial planting schedule, based on the initial planting date and the required number of days for the corresponding crop field **206c4**

( D )

FIG. 4A

( D )

Forming one or more harvest weeks and determining the initial harvest schedule, for each crop field, based on the initial harvest date of the corresponding crop field and the harvest period **206c5**

Determining the initial weekly production capacity of the crop from the one or more crop fields, based on the initial harvest schedule and the estimated weekly production capacity of the crop from the one or more crop fields **206c6**

Computing an excess production capacity for each harvest week of the one or more harvest weeks, based on the initial weekly production capacity of the crop from the one or more crop fields and the weekly storage capacity for each week during the harvest period **206c7**

Computing the fitness value of the initial planting schedule, based on the excess production capacity for each harvest week **206c8**

FIG. 4B

Selecting a first set of successive planting schedules from the plurality of initial planting schedules, based on the sorting of the fitness value and a first threshold percentage and adding first set of successive planting schedules to the plurality of successive planting schedules **206g1**

Choosing two initial planting schedules, randomly, from remaining of the plurality of initial planting schedules, based on the sorting of the fitness value and a second threshold percentage **206g2**

Generating a new planting schedule from the choosing two initial planting schedules, based on a random threshold value and adding the generated planting schedule to the plurality of successive planting schedules **206g3**

Repeating the steps (**206g2**) through (**206g3**) until the number of the plurality of successive planting schedules is equal to the number of the plurality of initial planting schedules, to obtain the plurality of successive planting schedules **206g4**

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221067748
- US 2020134485 A1

- US 2011276336 A1

**Non-patent literature cited in the description**

- **JAVAD ANSARIFAR et al.** *Scheduling Planting Time Through Developing an Optimization Model and Analysis of Time Series Growing Degree Units*